(19) **Europäisches Patentamt**
**European Patent Office**
**Office européen des brevets**

(11) **EP 4 748 678 A1**

(12) **EUROPEAN PATENT APPLICATION**
published in accordance with Art. 153(4) EPC

(43) Date of publication:
**27.05.2026 Bulletin 2026/22**

(21) Application number: **24850899.6**

(22) Date of filing: **01.08.2024**

(51) International Patent Classification (IPC):
**B60W 60/00** (2020.01)    **B60W 30/095** (2012.01)

(86) International application number:
**PCT/CN2024/109165**

(87) International publication number:
**WO 2025/031254 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 CN 202311006346**

(71) Applicant: **HUAWEI TECHNOLOGIES CO., LTD.
Shenzhen 518129 (CN)**

(72) Inventors:
• **LIU, Fei**
  **Shenzhen, Guangdong 518129 (CN)**
• **HAO, Donghao**
  **Shenzhen, Guangdong 518129 (CN)**
• **TANG, Lei**
  **Shenzhen, Guangdong 518129 (CN)**
• **YANG, Shaoyu**
  **Shenzhen, Guangdong 518129 (CN)**
• **CHENG, Siyuan**
  **Shenzhen, Guangdong 518129 (CN)**
• **ZHANG, Hongbo**
  **Shenzhen, Guangdong 518129 (CN)**

(74) Representative: **Isarpatent
Patent- und Rechtsanwälte Part G mbB
Friedrichstrasse 31
80801 München (DE)**

(54) **TRAJECTORY PLANNING METHOD AND RELATED DEVICE**

(57) A trajectory planning method and a related device are provided. The method may be applied to the autonomous driving field in artificial intelligence. The method includes: obtaining first state information of a vulnerable road user, where the vulnerable road user is within a sensing range of an ego vehicle, and the first state information includes a location of the vulnerable road user; determining, based on the first state information, one or more reachable locations of the vulnerable road user at each of N subsequent moments and a probability of each reachable location; and planning a trajectory of the ego vehicle. Because the probability of each reachable location of the vulnerable user is considered during route planning of the ego vehicle, that is, all reachable locations of the vulnerable road user are not directly avoided, an exploration range of the ego vehicle in a travelling process is expanded, to help obtain a better travelling trajectory of the ego vehicle.

A first device obtains first state information of a vulnerable road user, where the vulnerable road user is within a sensing range of an ego vehicle, and the first state information includes a location of the vulnerable road user — 101

The first device determines state information of the vulnerable road user at N subsequent moments based on the first state information, where the state information at the N moments includes one or more reachable locations of the vulnerable road user at each of the N moments and a probability of each reachable location, and N is an integer greater than 0 — 102

The first device plans a trajectory of the ego vehicle based on the state information of the vulnerable road user at the N subsequent moments — 103

FIG. 1

## Description

This application claims priority to Chinese Patent Application No. 202311006346.8, filed with the China National Intellectual Property Administration on August 10, 2023 and entitled "TRAJECTORY PLANNING METHOD AND RELATED DEVICE", which is incorporated herein by reference in its entirety.

## TECHNICAL FIELD

This application relates to the autonomous driving field, and in particular, to a trajectory planning method and a related device.

## BACKGROUND

Artificial intelligence (Artificial Intelligence, AI) is a theory, a method, a technology, and an application system for using a digital computer or a machine controlled by a digital computer to simulate, extend, and expand human intelligence, sense an environment, obtain knowledge, and use the knowledge to obtain an optimal result. In other words, artificial intelligence is a branch of computer science, and attempts to understand essence of intelligence and produce a new intelligent machine that can react in a manner similar to human intelligence. Artificial intelligence is to study design principles and implementation methods of various intelligent machines, so that the machines have perception, inference, and decision-making functions.

It is a common manner to apply the artificial intelligence technology to the autonomous driving field. A currently used manner includes: determining a reachable set of a road user at a next moment based on state information of the road user at a current moment. The reachable set includes all locations that can be reached by the road user at the next moment.

However, in the foregoing solution, only the location that may be reached by the road user at the next moment is calculated, and all locations in the reachable set are avoided during subsequent route planning of an ego vehicle, thereby greatly reducing an advancing range of the ego vehicle.

## SUMMARY

To resolve the foregoing technical problem, this application provides a trajectory planning method and a related device. Because a probability of each reachable location of a vulnerable user is considered during route planning of an ego vehicle, that is, all reachable locations of the vulnerable road user are not directly avoided, an exploration range of the ego vehicle in a travelling process is expanded, to help obtain a better travelling trajectory of the ego vehicle.

The technical solutions provided in this application are specifically as follows:

According to a first aspect, this application provides a trajectory planning method, which may be applied to the autonomous driving field in the artificial intelligence field. The method includes: A first device obtains first state information of a vulnerable road user (vulnerable road user, VRU). The vulnerable road user is within a sensing range of an ego vehicle, and the first state information includes a location of the vulnerable road user. For example, the vulnerable road user has any one or more of the following characteristics: small inertia of motion, poor regularity, few constraints during travelling on a road, or another characteristic. For example, the vulnerable road user may be a bicycle, an electric vehicle, or a pedestrian. The first device may determine state information of the vulnerable road user at N subsequent moments based on the first state information of the vulnerable road user, where the state information at the N moments includes one or more reachable locations of the vulnerable road user at each of the N moments and a probability of each reachable location, and N is an integer greater than 0; and further plan a trajectory of the ego vehicle based on the state information of the vulnerable road user at the N subsequent moments.

In this implementation, the reachable location of the vulnerable road user at each of the N subsequent moments and the probability of each reachable location are determined based on the location of the vulnerable road user. Because the probability of each reachable location of the vulnerable user is considered during route planning of the ego vehicle, that is, all reachable locations of the vulnerable road user are not directly avoided, an exploration range of the ego vehicle in a travelling process is expanded, to help obtain a better travelling trajectory of the ego vehicle.

In a possible implementation of the first aspect, the first state information includes a location of the vulnerable road user at a moment t, the state information of the vulnerable road user at the N subsequent moments includes second state information of the vulnerable road user at a moment t+1, and that the first device determines the state information of the vulnerable road user at the N subsequent moments based on the first state information may include:

The first device determines a first transition probability corresponding to the vulnerable road user. The first transition probability indicates a probability that the vulnerable road user performs each of at least one action from the moment t to the moment t+1. It should be understood that "the first transition probability indicates the probability that the vulnerable road user performs each of the at least one action from the moment t to the moment t+1" may also be understood as "the first transition probability indicates a probability that the vulnerable road user determines, at the moment t, to perform each of the at least one action from the moment t to the moment t+1".

The first device determines second state information of the vulnerable road user at the moment t+1 based on the first state information and the first transition probability. The second state information includes one or more reachable locations of the vulnerable road user at the moment t+1 and a probability corresponding to each reachable location. Optionally, second state information of a first vulnerable road user at the moment t+1 may further include any one or more of the following information: a speed, an acceleration, a steering angle, other information, or the like corresponding to each reachable location.

In this implementation, the state information of the vulnerable road user at the moment t is obtained, and then the probability (namely, the first transition probability) that the vulnerable road user performs each of the at least one action from the moment t to the moment t+1 is determined. Then, the one or more reachable locations of the vulnerable road user at the moment t+1 and the probability corresponding to each reachable location are determined based on the state information of the vulnerable road user at the moment t and the first transition probability. Implementation logic of the foregoing solution is consistent with actual travelling logic of the vulnerable road user, and can accurately reflect a probability that the vulnerable road user is at each reachable location.

In a possible implementation of the first aspect, the first transition probability is obtained based on a second transition probability and/or a third transition probability. The second transition probability indicates a probability that the vulnerable road user uses each of at least one acceleration from the moment t to the moment t+1. For example, the second transition probability may include a plurality of second transition probability values in one-to-one correspondence with a plurality of accelerations, and each second transition probability value represents a probability that the vulnerable road user uses one of the plurality of accelerations from the moment t to the moment t+1. The third transition probability indicates a probability that the vulnerable road user uses each of at least one steering angle from the moment t to the moment t+1. For example, the third transition probability may include a plurality of third transition probability values in one-to-one correspondence with a plurality of steering angles, and each third transition probability value represents a probability that the vulnerable road user uses one of the plurality of steering angles from the moment t to the moment t+1.

In this implementation, the second transition probability and the third transition probability are separately determined. The second transition probability indicates a probability that the vulnerable road user uses any one of the plurality of accelerations from the moment t to the moment t+1. The third transition probability indicates a probability that the vulnerable road user uses any one of the plurality of steering angles from the moment t to the moment t+1. Therefore, the first transition probability is determined based on the second transition probability and/or the third transition probability. In this way, a process of determining the first transition probability is more refined, to help obtain a more accurate first transition probability, and help predict the location of the vulnerable road user more precisely.

In a possible implementation of the first aspect, the first state information further includes a second acceleration of the vulnerable road user at the moment t, and the method further includes: The first device obtains first information of the vulnerable road user. The first information indicates a probability that the vulnerable road user forces the right-of-way. First information of each vulnerable road user may be understood as radicalness of each vulnerable road user. The first information of each vulnerable road user may not only indicate a probability that the vulnerable road user forces the right-of-way against the ego vehicle, but also indicate a probability that the vulnerable road user gives way to the ego vehicle. Optionally, a sum of the probability that the vulnerable road user forces the right-of-way against the ego vehicle and the probability that the vulnerable road user gives way to the ego vehicle is equal to 1. Further, the first device determines the second transition probability based on the second acceleration and the first information.

In this implementation, because the first information of the vulnerable road user can indicate the probability that the vulnerable road user forces the right-of-way, a higher probability that a vulnerable road user forces the right-of-way indicates that the vulnerable road user is more likely to accelerate, and a lower probability that a vulnerable road user forces the right-of-way indicates that the vulnerable road user is more likely to decelerate. Therefore, the second transition probability corresponding to the vulnerable road user is determined, that is, the probability that the vulnerable road user uses each of the plurality of accelerations from the moment t to the moment t+1 is determined, based on the first information of the vulnerable road user and the acceleration used by the vulnerable road user at the moment t. The foregoing process of determining the second transition probability better meets an actual situation in which the vulnerable road user travels, which helps obtain a more accurate second transition probability, and helps predict the location of the vulnerable road user at the moment t+1 more accurately.

In a possible implementation of the first aspect, that the first device determines the second transition probability based on the second acceleration and the first information includes: The first device determines, based on the second acceleration, a first probability that the vulnerable road user uses a first acceleration from the moment t to the moment t+1, where the first acceleration is any one of the at least one acceleration, and the first probability is larger when a distance between the first acceleration and the second acceleration is shorter; and the first device determines, based on the first information, that the vulnerable road user uses a first adjustment coefficient of the first acceleration from the moment t to the moment t+1, and may further determine the second transition probability based on the first probability and the first adjustment coefficient.

In this implementation, because the vulnerable road user has continuity in a travelling process, the limitation "the first probability is larger when a distance between the first acceleration and the second acceleration is shorter" meets an actual travelling situation of the vulnerable road user. If the vulnerable road user wants to force the right-of-way, the vulnerable road user may increase the acceleration; or if the vulnerable road user does not want to force the right-of-way, the vulnerable road user may decrease the acceleration. Therefore, in a case of "the first probability is larger when a distance between the first acceleration and the second acceleration is shorter", the first adjustment coefficient is determined based on the first information, and the second transition probability is determined based on both the first probability and the first adjustment coefficient, to help obtain the second transition probability that better meets the actual situation of the vulnerable road user.

In a possible implementation of the first aspect, the first state information further includes a second steering angle of the vulnerable road user at the moment t, and the method further includes: The first device obtains second information of the vulnerable road user, where the second information indicates at least one first predicted trajectory of the vulnerable road user; and the first device determines the third transition probability based on the second steering angle and the second information. In this implementation, because the first predicted trajectory of the vulnerable road user can reflect, to some extent, a travelling situation of the vulnerable road user after the moment t, a probability that the vulnerable road user uses the second steering angle is determined based on the at least one predicted trajectory of the vulnerable road user, to help obtain a more accurate third transition probability.

In a possible implementation of the first aspect, that the first device determines the third transition probability based on the second steering angle and the second information includes: The first device determines, based on the second steering angle, a second probability that the vulnerable road user uses a first steering angle from the moment t to the moment t+1, where the first steering angle is any one of the at least one steering angle, and the second probability is larger when a distance between the first steering angle and the second steering angle is shorter; and the first device determines, based on the second information, that the vulnerable road user uses a second adjustment coefficient of the first steering angle from the moment t to the moment t+1, and may further determine the third transition probability based on the second probability and the second adjustment coefficient.

In this implementation, because the vulnerable road user has continuity in the travelling process, the limitation "the second probability is larger when a distance between the first steering angle and the second steering angle is shorter" meets the actual travelling situation of the vulnerable road user. Therefore, in a case of "the second probability is larger when a distance between the first steering angle and the second steering angle is shorter", the second adjustment coefficient is determined based on the second information, and the third transition probability is determined based on the second probability and the second adjustment coefficient, to help obtain the third transition probability that better meets the actual situation of the vulnerable road user.

In a possible implementation of the first aspect, the method further includes: The first device determines a feasible steering angle range of the vulnerable road user based on a first degree of inclination of the vulnerable road user, where the first degree of inclination indicates an allowable largest degree of inclination of the vulnerable road user in a steering process, and the at least one steering angle is obtained based on the feasible steering angle range of the vulnerable road user.

In this implementation, a steering angle range of the vulnerable road user in a current situation is determined based on the allowable largest degree of inclination of the vulnerable road user in the steering process and a mechanical principle. The obtained steering angle range better meets the current situation of the vulnerable road user. This helps obtain a more accurate steering angle range of the vulnerable road user, and helps predict the location of the vulnerable road user more accurately.

In a possible implementation of the first aspect, that the first device determines the first transition probability corresponding to the vulnerable road user includes: The first device determines the first transition probability corresponding to the vulnerable road user based on a Markov chain (Markov Chain) algorithm. For example, in each step according to the Markov chain algorithm, the ego vehicle may perform an action from the moment t to the moment t+1, so that the ego vehicle changes from a state at the moment t to another state at the moment t+1; or the ego vehicle may maintain a current state. A state change is referred to as a transition, and a probability related to the state change is referred to as a transition probability.

In this implementation, a probability that the vulnerable road user performs an action from the moment t to the moment t+1 is determined according to the Markov chain algorithm, and meets flexible motion and uncertainty of the vulnerable road user, to more accurately reflect the probability that the vulnerable road user is at each reachable location.

In a possible implementation of the first aspect, that the first device determines the second state information of the vulnerable road user at the moment t+1 based on the first state information and the first transition probability includes: The first device determines the second state information of the vulnerable road user at the moment t+1 based on the first state information, a feasible acceleration range of the vulnerable road user, a feasible steering angle range of the vulnerable road user, a kinematics model, and the first transition probability. In this implementation, the first state information of the vulnerable road user at the moment t, the feasible acceleration range of the vulnerable road user, the feasible steering angle range of the vulnerable road user, the kinematics model, and the first transition probability corresponding to the vulnerable road user are obtained. The first transition probability indicates the probability that the vulnerable road user performs each of the at least one action from the moment t to the moment t+1. The second state information of the vulnerable road user at the moment t+1 is determined based on the foregoing plurality of pieces of information. A process of determining "the second state information at the moment t+1" meets a kinematic constraint, and the state information of the vulnerable road user at the moment t is fully combined, to help obtain more accurate state information of the vulnerable road user at the moment t+1, that is, help obtain a more accurate reachable location of the vulnerable road user at the moment t+1.

In a possible implementation of the first aspect, that the first device determines the second state information of the vulnerable road user at the moment t+1 based on the first state information, the feasible acceleration range of the vulnerable road user, the feasible steering angle range of the vulnerable road user, the kinematics model, and the first transition probability includes: The first device may determine, based on the first state information of the first vulnerable road user, the feasible acceleration range of the first vulnerable road user, the feasible steering angle range of the first vulnerable road user, and a dynamic model, an action set that can be performed by the first vulnerable road user from the moment t to the moment t+1. The action set includes the at least one action that can be performed by the first vulnerable road user from the moment t to the moment t+1.

The first device may determine the second state information of the first vulnerable road user at the moment t+1 based on the action set that can be performed by the first vulnerable road user from the moment t to the moment t+1 and the first transition probability corresponding to the first vulnerable road user.

In a possible implementation of the first aspect, the method further includes: The first device obtains at least one second predicted trajectory of the ego vehicle. Each second predicted trajectory indicates a location of the ego vehicle within the N moments after the moment t, and N is an integer greater than or equal to 1. For example, the first device may determine at least one feasible policy of the ego vehicle within the N moments after the moment t based on surrounding environment information, a traffic rule, a dynamic motion constraint of the ego vehicle, and/or other information, and infer a case in which the ego vehicle uses each policy within the N moments after the moment t, to obtain at least one second predicted trajectory in one-to-one correspondence with the at least one feasible policy.

That the first device plans a route of the ego vehicle based on the state information of the vulnerable road user at the N subsequent moments includes: The first device generates evaluation information of each second predicted trajectory based on the state information of the vulnerable road user at the N subsequent moments, which may represent evaluation information of a policy of inferring the second predicted trajectory; and further plans the trajectory of the ego vehicle based on the evaluation information of each second predicted trajectory. The state information of the vulnerable road user at the N subsequent moments is obtained based on the first state information of the vulnerable road user. Optionally, the evaluation information of each second predicted trajectory may be represented as a score corresponding to each second predicted trajectory. A lower score corresponding to each second predicted trajectory may indicate that the second predicted trajectory is better, that is, indicate that a policy of inferring the second predicted trajectory is better.

In this implementation, evaluation information of each predicted trajectory of the ego vehicle at the N moments after the moment t may be further generated based on the state information of the vulnerable road user at the N subsequent moments, to plan the trajectory of the ego vehicle based on the evaluation information of each second predicted trajectory, instead of directly screening out the reachable location of the vulnerable road user at the N subsequent moments from a travelling route of the ego vehicle. This helps expand exploration space in a travelling process of the ego vehicle, and helps plan a better route of the ego vehicle.

In a possible implementation of the first aspect, the method further includes: The first device updates a first parameter based on one or more reachable locations of the vulnerable road user at a target moment and a location of the vulnerable road user at the target moment. The target moment includes one or more moments after the moment t, and the first parameter includes at least one parameter used in a process of generating a transition probability corresponding to the vulnerable road user. Optionally, the first parameter may include at least one parameter used in a process of generating the first adjustment coefficient, and/or at least one parameter used in a process of generating the second adjustment coefficient.

In this implementation, that the first parameter includes the at least one parameter used in the process of generating the transition probability corresponding to the vulnerable road user is that the first parameter includes a parameter used in a process of generating state information of the vulnerable road user after the moment t. The first parameter is updated based on an actual location of the vulnerable road user at the one or more moments after the moment t and a reachable location of the vulnerable road user at the one or more moments after the moment t. In other words, a parameter used in a process of generating the reachable location of the vulnerable road user at the one or more moments after the moment t is adjusted based on the actual location of the vulnerable road user at the one or more moments after the moment t. This helps subsequently generate a more accurate reachable location of the vulnerable road user.

According to a second aspect, this application provides a trajectory planning apparatus, which may be applied to the autonomous driving field in the artificial intelligence field. The trajectory planning apparatus includes: an obtaining module, configured to obtain first state information of a vulnerable road user, where the vulnerable road user is within a sensing range of an ego vehicle, and the first state information includes a location of the vulnerable road user; a determining module, configured to determine state information of the vulnerable road user at N subsequent moments based on the first state information, where the state information at the N moments includes one or more reachable locations of the vulnerable road user at each of the N moments and a probability of each reachable location, and N is an integer greater than 0; and a planning module, configured to plan a trajectory of the ego vehicle based on the state information of the vulnerable road user at the N subsequent moments.

In the second aspect of this application, the trajectory planning apparatus may be further configured to perform the steps performed by the first device in the possible implementations of the first aspect. For specific implementation steps of the second aspect and the possible implementations of the second aspect of this application and beneficial effects brought by each possible implementation, refer to descriptions in the possible implementations of the first aspect. Details are not described herein again.

According to a third aspect, this application provides a device, which may include a memory, a processor, and a bus system. The memory is configured to store a program, and the processor is configured to execute the program in the memory, including the following step: The bus system is configured to connect the memory and the processor, so that the memory and the processor communicate with each other.

In the third aspect of this application, the processor in the device may be further configured to perform the steps performed by the first device in the possible implementations of the first aspect. For details, refer to the first aspect. Details are not described herein again.

According to a fourth aspect, this application provides a vehicle. The vehicle may include the trajectory planning apparatus in the second aspect, or may include the device in the third aspect.

According to a fifth aspect, this application provides a computer-readable storage medium. The computer-readable storage medium stores a computer program, and when the computer program is run on a computer, the computer is enabled to perform the trajectory planning method in the first aspect.

According to a sixth aspect, this application provides a circuit system. The circuit system includes a processing circuit, and the processing circuit is configured to perform the trajectory planning method in the first aspect.

According to a seventh aspect, this application provides a computer program product. When the computer program product is run on a computer, the computer is enabled to perform the trajectory planning method in the first aspect.

According to an eighth aspect, this application provides a chip system. The chip system includes a processor, configured to implement functions in the foregoing aspects, for example, sending or processing data and/or information in the foregoing methods. In a possible design, the chip system further includes a memory. The memory is configured to store program instructions and data that are necessary for a server or a communication device. The chip system may include a chip, or may include a chip and another discrete component.

## BRIEF DESCRIPTION OF DRAWINGS

FIG. 1 is a schematic flowchart of a trajectory planning method according to an embodiment of this application;
FIG. 2 is another schematic flowchart of a trajectory planning method according to an embodiment of this application;
FIG. 3 is a diagram of a relationship between "a value of a first probability" and "a distance between a first acceleration and a second acceleration" according to an embodiment of this application;
FIG. 4 is a diagram of a process of obtaining state information of a road user at N moments after a moment t according to an embodiment of this application;
FIG. 5 is a diagram of planning a route of an ego vehicle based on state information at N moments after a moment t according to an embodiment of this application;
FIG. 6 is a diagram of all reachable locations of a road user at a moment t+1, a probability corresponding to each reachable location, and an actual location of the road user at the moment t+1 according to an embodiment of this application;
FIG. 7 is a diagram of a traffic scenario of an ego vehicle according to an embodiment of this application;
FIG. 8 is another schematic flowchart of a trajectory planning method according to this application;
FIG. 9 is a diagram of state information of a road user B1 at a moment t, a moment t+1, and a moment t+2 according to an embodiment of this application;
FIG. 10 is a diagram of a collision time difference corresponding to one piece of sub-state information of a road user B1 at a moment after a moment t according to an embodiment of this application;
FIG. 11 is a diagram of a first function used to obtain a score of each collision time difference based on each collision time difference according to an embodiment of this application;

FIG. 12 is a diagram of a second function used to obtain a comfort score based on an acceleration change amount according to an embodiment of this application;

FIG. 13 is a diagram of a third function used to obtain a passability score based on a difference between an acceleration of an ego vehicle and a preset acceleration according to an embodiment of this application;

FIG. 14 is two diagrams of driving policies in the traffic scenario shown in FIG. 7 according to an embodiment of this application;

FIG. 15 is a diagram of a structure of a trajectory planning apparatus according to an embodiment of this application;

FIG. 16 is a diagram of a structure of a device according to an embodiment of this application; and

FIG. 17 is a diagram of a structure of a vehicle according to an embodiment of this application.

## DESCRIPTION OF EMBODIMENTS

In the specification, claims, and accompanying drawings of this application, the terms such as "first" and "second" are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include" and "have" and any other variants thereof mean to cover the non-exclusive inclusion, so that a process, method, system, product, or device that includes a series of units is not necessarily limited to those units, but may include other units not expressly listed or inherent to such a process, method, product, or device.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

Embodiments of this application may be applied to various devices that can drive (for ease of description, the device is referred to as a "first device" subsequently). Optionally, embodiments of this application may be used to plan a trajectory of the first device in a driving process of the first device.

For example, the first device may be a vehicle, a mobile robot, or another device that can drive. Alternatively, the first device may be a chip, a vehicle-mounted domain controller, a vehicle-mounted computing platform, or the like. This is not limited in embodiments of this application. For example, the vehicle may be a car, a truck, a motorcycle, a bus, a ship, an airplane, a helicopter, a lawn mower, an entertainment vehicle, an amusement-park vehicle, a construction device, a tram, a golf cart, a train, or another type of vehicle. This is not limited in embodiments of this application.

In addition, a vulnerable road user (vulnerable road user, VRU) has any one or more of the following characteristics: small inertia of motion, poor regularity, few constraints during travelling on a road, or another characteristic. For example, the vulnerable road user may be a bicycle, an electric vehicle, or a pedestrian. Based on the foregoing reasons, in intelligent driving, predictability of the vulnerable road user is poor, and consequently, safety, rationality, and human-likeness of planning a driving trajectory of an ego vehicle that may interact with the vulnerable road user are affected.

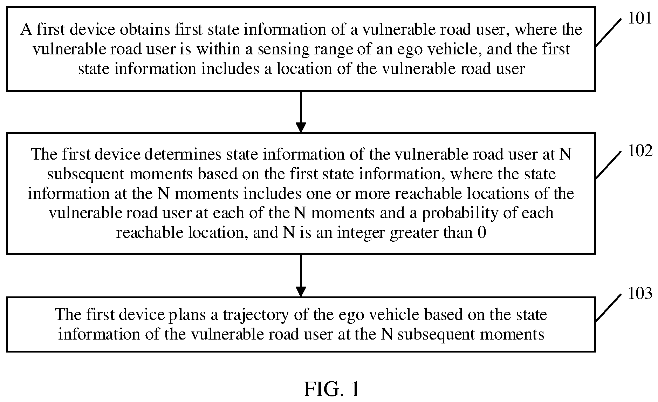

Based on the foregoing descriptions, this application provides a trajectory planning method. Specifically, FIG. 1 is a schematic flowchart of a trajectory planning method according to an embodiment of this application.

101: A first device obtains first state information of a vulnerable road user, where the vulnerable road user is within a sensing range of an ego vehicle, and the first state information includes a location of the vulnerable road user.

Optionally, the first state information may further include any one or more of the following information: a speed of the vulnerable road user, a second acceleration of the vulnerable road user, a second steering angle of the vulnerable road user, other information of the vulnerable road user, or the like. This is not limited in this embodiment of this application. It should be noted that two concepts "first acceleration" and "first steering angle" are used in subsequent steps, and are not described herein.

102: The first device determines state information of the vulnerable road user at N subsequent moments based on the first state information, where the state information at the N moments includes one or more reachable locations of the vulnerable road user at each of the N moments and a probability of each reachable location, and N is an integer greater than 0.

Optionally, the state information of the vulnerable road user at the N subsequent moments may further include any one or more of the following information: a speed, an acceleration, a steering angle, other information, or the like corresponding to each reachable location. This is not limited in this embodiment of this application.

103: The first device plans a trajectory of the ego vehicle based on the state information of the vulnerable road user at the N subsequent moments.

In this embodiment of this application, because the probability of each reachable location of the vulnerable user is considered during route planning of the ego vehicle, in other words, all reachable locations of the vulnerable road user are not directly avoided, an exploration range of the ego vehicle in a travelling process is expanded, to help obtain a better travelling trajectory of the ego vehicle.

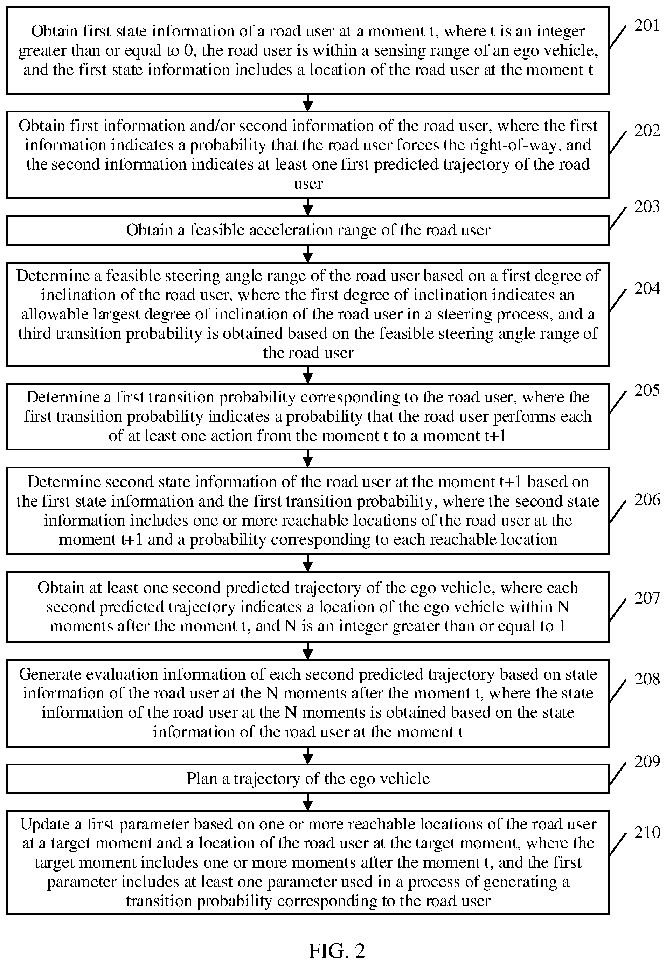

The following uses only an example in which a first device is a vehicle to describe in detail a specific implementation solution of a trajectory planning method provided in this application. For a case in which the first device is represented as another type of device, refer to this for understanding. Details are not described in this embodiment of this application. FIG. 2 is another schematic flowchart of a trajectory planning method according to an embodiment of this application. The trajectory planning method provided in this embodiment of this application may include the following steps.

201: Obtain first state information of a road user at a moment t, where t is an integer greater than or equal to 0, the road user is within a sensing range of an ego vehicle, and the first state information includes a location of the road user at the moment t.

In this embodiment of this application, the moment t may be a current moment, or the moment t is a moment in a preset range before the current moment.

Optionally, the road user in the embodiment corresponding to FIG. 2 may be a vulnerable road user. For example, the vulnerable road user has any one or more of the following characteristics: small inertia of motion, poor regularity, few constraints during travelling on a road, or another characteristic. For example, the vulnerable road user may be a bicycle, an electric vehicle, or a pedestrian.

For example, in an implementation, in a process of interacting with another road user, the ego vehicle may identify at least one road user that is a risk to the ego vehicle, and further obtain first state information of each road user that is a risk to the ego vehicle in step 201. Alternatively, in another implementation, after identifying at least one road user that is a risk to the ego vehicle, the ego vehicle may select, from the at least one road user that is a risk to the ego vehicle, at least one road user that has a game-theoretic interaction with the ego vehicle, and further obtain first state information of each road user that has a game-theoretic interaction with the ego vehicle in step 201.

In another implementation, after identifying at least one road user around the ego vehicle, the ego vehicle may obtain first state information of each road user around the ego vehicle, and the like in step 201. Specifically, a road user whose first state information is to be obtained may be flexibly determined based on an actual application scenario. This is not limited in this embodiment of this application.

202: Obtain first information and/or second information of the road user, where the first information indicates a probability that the road user forces the right-of-way, and the second information indicates at least one first predicted trajectory of the road user.

In this embodiment of this application, step 202 is an optional step. After obtaining first state information of each road user, the ego vehicle may further obtain first information and/or second information of each road user. For example, the first information and/or the second information may be generated by a machine learning model. For example, the machine learning model may be a neural network, or may be a Bayesian reasoning network. A specific obtaining manner may be determined based on an actual application product. This is not limited in this embodiment of this application.

The first information of each road user may be understood as radicalness of each road user. The first information of each road user may not only indicate a probability that the road user forces the right-of-way against the ego vehicle, but also indicate a probability that the road user gives way to the ego vehicle. Optionally, a sum of the probability that the road user forces the right-of-way against the ego vehicle and the probability that the road user gives way to the ego vehicle is equal to 1.

The second information of each road user may indicate at least one first predicted trajectory of the road user. Optionally, the second information of each road user may further include a probability corresponding to each first predicted trajectory. Each first predicted trajectory of the road user indicates a reachable location of the road user at a plurality of moments after the moment t, and the probability corresponding to each first predicted trajectory of the road user represents a probability that the location of the road user at the plurality of moments after the moment t meets the first predicted trajectory.

For example, second information of a road user A1 includes a predicted trajectory 1 and a probability 0.2 corresponding to the predicted trajectory 1, a predicted trajectory 2 and a probability 0.3 corresponding to the predicted trajectory 2, and a predicted trajectory 3 and a probability 0.5 corresponding to the predicted trajectory 3. In this case, it indicates that a probability that a location of the road user A1 at the plurality of moments after the moment t meets the predicted trajectory 1 is 0.2, a probability that the location of the road user A1 at the plurality of moments after the moment t meets the predicted trajectory 2 is 0.3, a probability that the location of the road user A1 at the plurality of moments after the moment t meets the predicted trajectory 3 is 0.5. It should be understood that the foregoing example is merely for ease of understanding of this solution, and is not intended to limit this solution.

203: Obtain a feasible acceleration range of the road user.

In this embodiment of this application, step 203 is an optional step. Optionally, in an implementation, the ego vehicle may determine a feasible acceleration range of each road user based on a type of the road user. The type of the road user may be a pedestrian, a bicycle, a motorcycle, a bus, a car, or another type. Examples are not exhaustively listed herein. For example, first mapping information may be deployed in the ego vehicle, and the first mapping information includes a feasible acceleration range corresponding to each type of road user. In this case, the ego vehicle may determine the feasible acceleration range of each road user based on the type of each road user and the first mapping information.

Alternatively, in another implementation, the ego vehicle may determine the feasible acceleration range of each road user in a table lookup method based on the type of the road user and a speed of the road user. This is not limited in this embodiment of this application.

204: Determine a feasible steering angle range of the road user based on a first degree of inclination of the road user, where the first degree of inclination indicates an allowable largest degree of inclination of the road user in a steering process, and the third transition probability is obtained based on the feasible steering angle range of the road user.

In this embodiment of this application, step 204 is an optional step. The ego vehicle may obtain a first degree of inclination of each road user. Optionally, in an implementation, the ego vehicle may determine the first degree of inclination of each road user based on the type of each road user. For example, second mapping information may be deployed in the ego vehicle, and the second mapping information includes a first degree of inclination corresponding to each type of road user. In this case, the ego vehicle may determine the first degree of inclination of each road user based on the type of each road user and the second mapping information.

Alternatively, in another implementation, the ego vehicle may determine the first degree of inclination of each road user based on the type of the road user and a speed of the road user. This is not limited in this embodiment of this application.

For example, step 204 may include: after determining the first degree of inclination of each road user, the ego vehicle may determine 0 to the first degree of inclination as an allowable degree of inclination range of each road user in the steering process; and further, may determine the feasible steering angle range of each road user based on the degree of inclination range of each road user and based on a mechanical principle in a balanced state. To further understand this solution, the following shows an example of "a formula used to determine the steering angle range of each road user based on the degree of inclination range of each road user".

$$\phi = atan\left(\frac{gLtan\varphi}{v^2}\right) \quad (1)$$

Herein, $\phi$ represents a steering angle of the road user, $atan$ (.) represents an arctangent function, $g$ represents a gravitational acceleration, $L$ represents a wheelbase of the road user in a longitudinal direction, that is, $L$ represents a wheelbase of the road user in a front-to-back direction, $v$ represents the speed of the road user, and $\varphi$ represents the degree of inclination of the road user. After a smallest degree of inclination in the allowable degree of inclination range of each road user in the steering process is substituted into Formula (1), a smallest steering angle in the feasible steering angle range of each road user may be obtained; and after an allowable largest degree of inclination (namely, the first degree of inclination) of each road user in the steering process is substituted into Formula (1), a largest steering angle in the feasible steering angle range of each road user may be obtained. In the foregoing manner, the feasible steering angle range of each road user is determined based on the allowable degree of inclination range of each road user. It should be noted that the example in Formula (1) is merely for ease of understanding of this solution, and is not intended to limit this solution.

In this embodiment of this application, a steering angle range of the road user in a current situation is determined based on the allowable largest degree of inclination of the road user in the steering process and a mechanical principle. The obtained steering angle range better meets the current situation of the road user. This helps obtain a more accurate steering angle range of the road user, and helps predict the location of the road user more accurately.

It should be noted that step 204 is an optional step. If step 204 is not performed, the ego vehicle may further determine the steering angle range of each road user based on the type of each road user. For example, third mapping information may be deployed in the ego vehicle, and the third mapping information includes a steering angle range corresponding to each type of road user. In this case, the ego vehicle may determine the steering angle range of each road user based on the type of each road user and the third mapping information. Alternatively, the ego vehicle may further determine the steering angle range of each road user based on the type and the speed of each road user. This is not limited in this embodiment of this application.

205: Determine a first transition probability corresponding to the road user, where the first transition probability indicates a probability that the road user performs each of at least one action from the moment t to a moment t+1.

In this embodiment of this application, the moment t+1 represents that a time period of one step passes after the moment t. For example, the time period of one step may be 0.5 second, 1 second, 2 seconds, or other duration. This may be specifically flexibly determined based on an actual situation. This is not limited herein.

It should be understood that "the first transition probability indicates the probability that the road user performs each of the at least one action from the moment t to the moment t+1" may also be understood as "the first transition probability indicates a probability that the road user determines, at the moment t, to perform each of the at least one action from the moment t to the moment t+1".

"A probability that the road user performs a first action from the moment t to the moment t+1" may be understood as a probability that the road user uses an acceleration from the moment t to the moment t+1, or may be understood as a probability that the road user uses a steering angle from the moment t to the moment t+1, or may be understood as a probability that the road user uses an acceleration and a steering angle from the moment t to the moment t+1, or the like. It should be noted that, "the probability that the road user performs the first action from the moment t to the moment t+1" may alternatively be understood as a probability that the road user uses another action in the travelling process. This may be specifically determined based on an actual situation. This is not limited herein.

Optionally, the first transition probability is obtained based on a second transition probability and/or a third transition probability. The second transition probability indicates a probability that the road user uses each of at least one acceleration from the moment t to the moment t+1. For example, the second transition probability may include a plurality of second transition probability values in one-to-one correspondence with a plurality of accelerations, and each second transition probability value represents a probability that the road user uses one of the plurality of accelerations from the moment t to the moment t+1. The third transition probability indicates a probability that the road user uses each of at least one steering angle from the moment t to the moment t+1. For example, the third transition probability may include a plurality of third transition probability values in one-to-one correspondence with a plurality of steering angles, and each third transition probability value represents a probability that the road user uses one of the plurality of steering angles from the moment t to the moment t+1.

For example, the ego vehicle may normalize both the second transition probability and the third transition probability that correspond to each road user, and multiply a normalized second transition probability by a normalized third transition probability, to obtain a first transition probability corresponding to each road user. In this embodiment of this application, the second transition probability and the third transition probability are separately determined. The second transition probability indicates a probability that the road user uses any one of the plurality of accelerations from the moment t to the moment t+1. The third transition probability indicates a probability that the road user uses any one of the plurality of steering angles from the moment t to the moment t+1. Therefore, the first transition probability is determined based on the second transition probability and/or the third transition probability. In this way, a process of determining the first transition probability is more refined, to help obtain a more accurate first transition probability, and help predict the location of the road user more precisely.

Alternatively, the second transition probability may be directly used as the first transition probability, or the third transition probability may be directly used as the first transition probability. Alternatively, when "the probability that the road user performs the first action from the moment t to the moment t+1" is understood as a probability that the road user uses another action in the travelling process, the first transition probability may be represented in another form. This is not limited in this embodiment of this application.

Optionally, the ego vehicle may determine the second transition probability corresponding to each road user based on a second acceleration used by each road user at the moment t and the first information of each road user. The first information corresponding to each road user indicates the probability that each road user forces the right-of-way against the ego vehicle. For a specific representation form of "the first information corresponding to each road user", refer to the foregoing descriptions. Details are not described herein again.

For a specific implementation process in which the ego vehicle determines a second transition probability corresponding to any one (for ease of description, referred to as a "first road user" subsequently) of the at least one road user, optionally, that the ego vehicle determines the second transition probability corresponding to the first road user based on a second acceleration and first information that correspond to the first road user may include: The ego vehicle may obtain a feasible acceleration range of the first road user by using the foregoing steps, and discretize the feasible acceleration range of the first road user, to obtain at least one feasible acceleration of the first road user. The first acceleration is any one of the foregoing at least one feasible acceleration.

The ego vehicle may determine, based on the second acceleration of the first road user, a first probability that the first road user uses the first acceleration in the at least one acceleration from the moment t to the moment t+1. The first probability is larger when a distance between the first acceleration and the second acceleration is shorter, that is, when an absolute value of a difference between the first acceleration and the second acceleration is smaller; or the first probability is smaller when a distance between the first acceleration and the second acceleration is farther, that is, when an absolute value of a difference between the first acceleration and the second acceleration is larger.

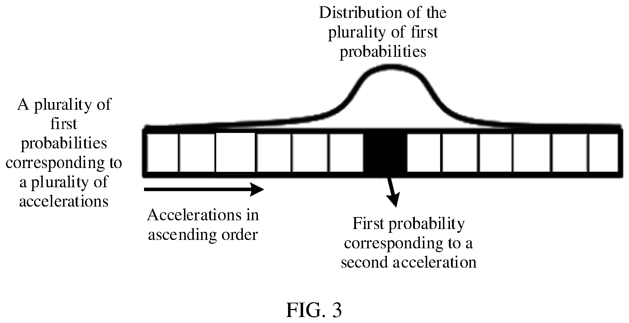

For more intuitive understanding of this solution, FIG. 3 is a diagram of a relationship between "a value of a first probability" and "a distance between a first acceleration and a second acceleration" according to an embodiment of this application. Each grid in FIG. 3 represents a value of a first probability corresponding to one acceleration in the feasible acceleration range of the first road user. Values of a plurality of accelerations corresponding to a plurality of grids from left to right in FIG. 3 gradually increase, and an acceleration corresponding to a black grid is the same as a second acceleration used by the first road user at the moment t. A distribution of a plurality of first probabilities in one-to-one correspondence with the plurality of accelerations may be, for example, a curve above the grid. A value of a first probability corresponding to the second acceleration is the largest. A first probability corresponding to an acceleration is smaller when a difference between the acceleration and the second acceleration is larger. It should be understood that an example in FIG. 3 is merely for ease of understanding, and is not intended to limit this solution.

The ego vehicle may determine, based on first information of the first road user, that the first road user uses a first adjustment coefficient of the first acceleration in the at least one acceleration from the moment t to the moment t+1. For further understanding of this solution, the following discloses an example of a formula for determining the first adjustment coefficient:

$$\lambda_a = (1-p)\lambda_a^1 + p\lambda_a^2 \quad (2)$$

Herein, $\lambda_a$ represents the first adjustment coefficient, $p$ represents the first information of the first road user, $\lambda_a^1$ and $\lambda_a^2$ are two coefficients, and values of $\lambda_a^1$ and $\lambda_a^2$ may be determined based on the first acceleration. For example, a plurality of values of $\lambda_a^1$ in one-to-one correspondence with a plurality of accelerations and a plurality of values of $\lambda_a^2$ in one-to-one correspondence with the plurality of accelerations may be deployed in the ego vehicle. In this case, after the first acceleration is determined, a value of $\lambda_a^1$ corresponding to the first acceleration and a value of $\lambda_a^2$ corresponding to the first acceleration may be determined, and a value of $\lambda_a$ may be obtained. It should be understood that, the example in Formula (2) is merely for ease of understanding of this solution, and is not intended to limit this solution.

The ego vehicle determines, based on the first adjustment coefficient and the first probability corresponding to the first acceleration that are obtained in the foregoing step, the second transition probability value of the first acceleration used by the first road user from the moment t to the moment t+1. For example, the ego vehicle may multiply the first probability corresponding to the first acceleration by the first adjustment coefficient, to obtain the second transition probability value corresponding to the first acceleration. For further understanding of this solution, the following discloses an example of a formula used to determine the second transition probability value corresponding to the first acceleration:

$$\Gamma(\alpha, \beta) = p_\beta \lambda_a \quad (3)$$

Herein, $\alpha$ represents the second acceleration of the first road user, $\beta$ represents any first acceleration in a feasible acceleration range of the first road user, $\Gamma(\alpha, \beta)$ represents a second transition probability value corresponding to the first acceleration, $p_\beta$ represents a first probability corresponding to the first acceleration, and $\lambda_a$ represents a first adjustment coefficient. It should be understood that an example in Formula (3) is merely for ease of understanding of this solution, and is not intended to limit this solution.

The ego vehicle repeatedly performs the foregoing steps for a plurality of times, to obtain a second transition probability value corresponding to each of the at least one acceleration in the feasible acceleration range of the first road user, that is, to obtain a second transition probability corresponding to the first road user.

The ego vehicle repeatedly performs the foregoing steps for one or more times, to obtain a second transition probability corresponding to each of the at least one road user.

In this embodiment of this application, because the first information of the road user can indicate the probability that the road user forces the right-of-way, a higher probability that a road user forces the right-of-way indicates that the road user is more likely to accelerate, and a lower probability that a road user forces the right-of-way indicates that the road user is more likely to decelerate. Therefore, the second transition probability corresponding to the road user is determined, that is, the probability that the road user uses each of the plurality of accelerations from the moment t to the moment t+1 is determined, based on the first information of the road user and the acceleration used by the road user at the moment t. The foregoing process of determining the second transition probability better meets an actual situation in which the road user travels, which helps obtain a more accurate second transition probability, and helps predict the location of the road user at the moment t+1 more accurately.

Because the road user has continuity in the travelling process, the limitation "the first probability is larger when the distance between the first acceleration and the second acceleration is shorter" meets the actual travelling situation of the road user. If the road user wants to force the right-of-way, the road user may increase the acceleration; or if the road user does not want to force the right-of-way, the road user may decrease the acceleration. Therefore, in a case of "the first probability is larger when the distance between the first acceleration and the second acceleration is shorter", the first adjustment coefficient is determined based on the first information, and the second transition probability is determined based on both the first probability and the first adjustment coefficient, to help obtain the second transition probability that better meets the actual situation of the road user.

Optionally, the ego vehicle may determine the third transition probability corresponding to each road user based on a second steering angle used by each road user at the moment t and the second information of each road user. The second information corresponding to each road user indicates at least one first predicted trajectory of each road user. Optionally, the second information corresponding to each road user may further include a probability corresponding to each first predicted trajectory. For a specific representation form of "the second information corresponding to each road user", refer to the foregoing description. Details are not described herein again.

For a specific implementation process in which the ego vehicle determines a third transition probability corresponding to any one (for ease of description, referred to as a "first road user" subsequently) of the at least one road user, optionally, that the ego vehicle determines the third transition probability corresponding to the first road user based on a second steering angle and second information that correspond to the first road user may include: The ego vehicle may obtain a feasible steering angle range of the first road user by using the foregoing steps, and discretize the feasible steering angle range of the first road user, to obtain at least one feasible steering angle of the first road user. The first steering angle is any one of the foregoing at least one feasible steering angle.

The ego vehicle may determine, based on the second steering angle used by the first road user at the moment t, a second probability that the first road user uses the first steering angle from the moment t to the moment t+1. The second probability is larger when a distance between the first steering angle and the second steering angle is shorter, that is, when an absolute value of a difference between the first steering angle and the second steering angle is smaller; or the second probability is smaller when a distance between the first steering angle and the second steering angle is farther, that is, when an absolute value of a difference between the first steering angle and the second steering angle is larger.

The ego vehicle may determine, based on the second information of the first road user, a second adjustment coefficient of the first steering angle used by the first road user from the moment t to the moment t+1. For example, in an implementation, a reachable location of the first road user at the moment t+1 is obtained after the first road user uses the first steering angle from the moment t to the moment t+1, a smallest first distance between the reachable location of the first road user at the moment t+1 and the at least one first predicted trajectory is obtained, and the second adjustment coefficient is determined based on the first distance. When the first distance is smaller, the second adjustment coefficient of the first steering angle used by the first road user from the moment t to the moment t+1 is larger.

In another implementation, a reachable location of the first road user at the moment t+1 is obtained after the first road user uses the first steering angle from the moment t to the moment t+1, a distance between the reachable location of the first road user at the moment t+1 and each of the at least one first predicted trajectory is obtained, that is, at least one distance in one-to-one correspondence with the at least one first predicted trajectory is obtained, and the second adjustment coefficient of the first steering angle used by the first road user from the moment t to the moment t+1 is determined based on the at least one distance and a probability corresponding to each first predicted trajectory. When the distance between the reachable location of the first road user at the moment t+1 and each of the at least one first predicted trajectory is shorter, the second adjustment coefficient of the first steering angle used by the first road user from the moment t to the moment t+1 is larger.

For example, the second information of the road user A1 includes the predicted trajectory 1 and the probability 0.2 corresponding to the predicted trajectory 1, the predicted trajectory 2 and the probability 0.3 corresponding to the predicted trajectory 2, and the predicted trajectory 3 and the probability 0.5 corresponding to the predicted trajectory 3. If a reachable location 1 of the road user A1 at the moment t+1 is obtained when the road user A1 uses a steering angle 1 from the moment t to the moment t+1, the ego vehicle learns that a distance between the reachable location 1 and the predicted trajectory 1 is a distance 1, and the ego vehicle determines, based on the distance 1, that the road user A1 uses an adjustment coefficient 1 of the steering angle 1 from the moment t to the moment t+1, where when the distance 1 is smaller, the adjustment coefficient 1 is larger; the ego vehicle learns that a distance between the reachable location 1 and the predicted trajectory 2 is a distance 2, and the ego vehicle determines, based on the distance 2, that the road user A1 uses an adjustment coefficient 2 of the steering angle 1 from the moment t to the moment t+1, where when the distance 2 is smaller, the adjustment coefficient 2 is larger; and the ego vehicle learns that a distance between the reachable location 1 and the predicted trajectory 3 is a distance 3, and the ego vehicle determines, based on the distance 3, that the road user A1 uses an adjustment coefficient 3 of the steering angle 1 from the moment t to the moment t+1, where when the distance 3 is smaller, the adjustment coefficient 3 is larger. The ego vehicle performs weighted summation on the adjustment coefficient 1, the adjustment coefficient 2, and the adjustment coefficient 3. The probability corresponding to the predicted trajectory 1 is used as a weight of the adjustment coefficient 1, the probability corresponding to the predicted trajectory 2 is used as a weight of the adjustment coefficient 2, and the probability corresponding to the predicted trajectory 3 is used as a weight of the adjustment coefficient 3. It should be understood that the example herein is merely for ease of understanding, and is not intended to limit this solution.

For further understanding of this solution, the following discloses an example of a formula used to determine the "adjustment coefficient" based on the "distance":

$$\lambda_{\alpha\beta} = e^{-\left(\frac{\Delta}{\Delta_{ref}}\right)^2} \qquad (4)$$

Herein, $\lambda_{\alpha\beta}$ represents the adjustment coefficient, $\Delta$ represents the distance, and $\Delta_{ref}$ is a hyperparameter. The second adjustment coefficient may be calculated based on the first distance by using Formula (4); or the adjustment coefficient 1 may be calculated based on the "distance 1" by using Formula (4), the adjustment coefficient 2 is calculated based on the "distance 2" by using Formula (4), and the adjustment coefficient 3 is calculated based on the "distance 3" by using Formula (4). It should be noted that the example in Formula (4) is merely for ease of understanding of this solution, and is not intended to limit this solution.

The ego vehicle may determine, based on the second probability that the first road user uses the first steering angle from the moment t to the moment t+1 and the second adjustment coefficient, a third transition probability value of the first steering angle used by the ego vehicle from the moment t to the moment t+1. For example, the ego vehicle may multiply the second adjustment coefficient by the second probability that the first road user uses the first steering angle from the moment t to the moment t+1, to obtain the third transition probability value of the first steering angle used by the first road user from the moment t to the moment t+1.

The ego vehicle repeatedly performs the foregoing steps for a plurality of times, to obtain a third transition probability value corresponding to each of at least one steering angle in the feasible steering angle range of the first road user, that is, obtain a third transition probability corresponding to the first road user.

The ego vehicle repeatedly performs the foregoing steps for one or more times, to obtain a third transition probability corresponding to each of the at least one road user.

In this embodiment of this application, because the first predicted trajectory of the road user can reflect, to some extent, a travelling situation of the road user after the moment t, a probability that the road user uses the second steering angle is determined based on the at least one predicted trajectory of the road user, to help obtain a more accurate third transition probability.

Because the road user has continuity in the travelling process, the limitation "the second probability is larger when a distance between the first steering angle and the second steering angle is shorter" meets the actual travelling situation of the road user. Therefore, in a case of "the second probability is larger when a distance between the first steering angle and the second steering angle is shorter", the second adjustment coefficient is determined based on the second information, and the third transition probability is determined based on the second probability and the second adjustment coefficient, to help obtain the third transition probability that better meets the actual situation of the road user.

For example, in an implementation, step 205 may include: The first device determines the first transition probability corresponding to each road user based on a Markov chain (Markov Chain) algorithm. For example, in each step based on the Markov chain (Markov Chain) algorithm, the ego vehicle may perform an action from the moment t to the moment t+1, so that the ego vehicle changes from a state at the moment t to another state at the moment t+1; or the ego vehicle may maintain a current state. A state change is referred to as a transition, and a probability related to the state change is referred to as a transition probability.

In this implementation, a probability that the road user performs an action from the moment t to the moment t+1 is determined according to the Markov chain algorithm, and meets flexible motion and uncertainty of the road user, to more accurately reflect the probability that the road user is at each reachable location.

In another implementation, step 205 may include: A first machine learning model on which a training operation is performed may be deployed in the first device. The first device may input first state information of each of the at least one road user at the moment t into the first machine learning model, and process the first state information by using the first machine learning model, to obtain the first transition probability that corresponds to each road user and that is output by the first machine learning model.

206: Determine second state information of the road user at the moment t+1 based on the first state information and the first transition probability, where the second state information includes one or more reachable locations of the road user at the moment t+1 and a probability corresponding to each reachable location.

In this embodiment of this application, optionally, step 206 may include: The ego vehicle determines second state information of each road user at the moment t+1 based on the first state information of each of the at least one road user at the moment t, the feasible acceleration range of each road user, the feasible steering angle range of each road user, a kinematics model, and a first transition probability of each road user. It should be noted that, a road user whose second state information at the moment t+1 specifically needs to be determined may be flexibly determined based on an actual application scenario. This is not limited in this embodiment of this application.

The first state information may include a location of each road user at the moment t. Optionally, the first state information may further include one or more of a speed, an acceleration, and a steering angle of each road user at the moment t. The kinematics model may be a second-order bicycle (Bicycle) kinematics model, another type of kinematics model, or the like. Examples are not exhaustively listed in this embodiment of this application.

For a process of obtaining the second state information of the first road user (namely, any one of the at least one road user), the ego vehicle may determine, based on the first state information of the first road user, the feasible acceleration range of the first road user, the feasible steering angle range of the first road user, and a dynamic model, an action set that can be performed by the first road user from the moment t to the moment t+1. The action set includes at least one action that can be performed by the first road user from the moment t to the moment t+1.

The ego vehicle may determine the second state information of the first road user at the moment t+1 based on the action set that can be performed by the first road user from the moment t to the moment t+1 and the first transition probability corresponding to the first road user. For example, the second state information of the first road user at the moment t+1 indicates at least one reachable location of each road user at the moment t+1 and a probability corresponding to each reachable location. Optionally, the second state information of the first road user at the moment t+1 may further include any one or more of the following information: a speed, an acceleration, a steering angle, other information, or the like corresponding to each reachable location. This is not limited in this embodiment of this application.

For further understanding of this solution, the following discloses an example of a formula used to determine the state information of the first road user at the moment t+1 based on the state information of the first road user at the moment t:

$$p(t_{k+1}) = \Gamma(t_k)p(t_k) \quad (5)$$

Herein, $p(t_{k+1})$ represents the state information of the first road user at the moment t+1, $p(t_k)$ represents the state information of the first road user at the moment t, $\Gamma(t_k)$ is obtained based on the first transition probability corresponding to the first road user and the action set that can be performed by the first road user from the moment t to the moment t+1, and $\Gamma(t_k)$ represents a probability that the first road user performs each action in the action set from the moment t to the moment t+1. It should be understood that an example in Formula (5) is merely for ease of understanding, and is not intended to limit this solution.

In this embodiment of this application, the first state information of the road user at the moment t, the feasible acceleration range of the road user, the feasible steering angle range of the road user, the kinematics model, and the first transition probability corresponding to the road user are obtained. The first transition probability indicates the probability that the road user performs each of the at least one action from the moment t to the moment t+1. The second state information of the road user at the moment t+1 is determined based on the foregoing plurality of pieces of information. A process of determining "the second state information at the moment t+1" meets a kinematic constraint, and the state information of the road user at the moment t is fully combined, to help obtain more accurate state information of the road user at the moment t+1, that is, help obtain a more accurate reachable location of the road user at the moment t+1.

207: Obtain at least one second predicted trajectory of the ego vehicle, where each second predicted trajectory indicates a location of the ego vehicle within N moments after the moment t, and N is an integer greater than or equal to 1.

In this embodiment of this application, step 207 is an optional step. For example, the ego vehicle may determine at least one feasible policy of the ego vehicle within the N moments after the moment t based on surrounding environment information, a traffic rule, a dynamic motion constraint of the ego vehicle, and/or other information, and infer a case in which the ego vehicle uses each policy within the N moments after the moment t, to obtain at least one second predicted trajectory in one-to-one correspondence with the at least one feasible policy.

208: Generate evaluation information of each second predicted trajectory based on state information of the road user at the N moments after the moment t, where the state information of the road user at the N moments is obtained based on the state information of the road user at the moment t.

In this embodiment of this application, step 208 is an optional step. The N moments after the moment t represent that N time steps pass after the moment t. A length of each step may be determined based on an actual situation. This is not limited in this embodiment of this application.

The state information of the road user at the N moments after the moment t may include state information of the road user at each of the N moments after the moment t. The state information of the road user at each moment after the moment t includes at least one reachable location of the road user at the moment and a probability corresponding to each reachable location. A type of information included in "the state information of the road user at each of the N moments after the moment t" is similar to a type of information included in "the second state information". For understanding, refer to the foregoing descriptions. Details are not described herein again.

For example, after determining the second state information of the first road user at the moment t+1 based on the first state information of the first road user (namely, any one of the at least one road user) at the moment t, the ego vehicle may continue to infer state information of the first road user at a next moment according to the Markov chain algorithm and the second state information of the first road user at the moment t+1, and repeat the foregoing steps for a plurality of times, to obtain the state information of the first road user at the N moments after the moment t. The ego vehicle repeatedly performs the foregoing steps, to obtain the state information of each of the at least one road user at the N moments after the moment t.

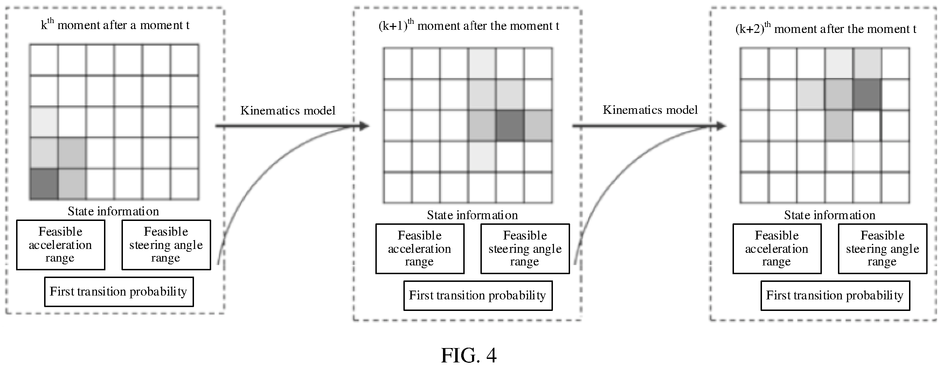

For more intuitive understanding of this solution, FIG. 4 is a diagram of a process of obtaining state information of a road user at N moments after a moment t according to an embodiment of this application. A kth moment after the moment t is any one of the N moments after the moment t. As shown in FIG. 4, the ego vehicle determines the state information of the first road user at the next moment, namely, state information of the first road user at the (k+1)th moment after the moment t in FIG. 4, based on the Markov chain (Markov Chain) algorithm and based on state information of the first road user at the kth moment after the moment t, a feasible acceleration range of the first road user at the kth moment after the moment t, a feasible steering angle range of the first road user at the k$^{th}$ moment after the moment t, a kinematics model, and a first transition probability of the first road user at the k$^{th}$ moment after the moment t.

A specific implementation of "the ego vehicle generates state information of the first road user at a next moment based on the state information of the first road user at the (k+1)$^{th}$ moment after the moment t" is similar to a specific implementation of "the ego vehicle generates the state information of the first road user at the next moment based on the state information of the first road user at the k$^{th}$ moment after the moment t". To be specific, the ego vehicle determines the state information of the first road user at the next moment, namely, state information of the first road user at a (k+2)$^{th}$ moment after the moment t in FIG. 4, according to the Markov chain algorithm and based on the state information of the first road user at the (k+1)$^{th}$ moment after the moment t, a feasible acceleration range of the first road user at the (k+1)$^{th}$ moment after the moment t, a feasible steering angle range of the first road user at the (k+1)$^{th}$ moment after the moment t, a kinematics model, and a first transition probability of the first road user at the (k+1)$^{th}$ moment after the moment t.

It should be understood that the example in FIG. 4 is merely for ease of understanding of a process in which the ego vehicle sequentially obtains the state information of the first road user at each of the N moments after the moment t, and is not intended to limit this solution.

For example, for ease of description, any one of the at least one second predicted trajectory is referred to as a target predicted trajectory. The ego vehicle may determine a first score of the target predicted trajectory based on the state information of each of the at least one road user at N moments after the moment t, namely, obtain evaluation information of the target predicted trajectory. The ego vehicle may repeatedly perform the foregoing steps for a plurality of times, to obtain evaluation information of each of the at least one second predicted trajectory.

Optionally, the evaluation information of each second predicted trajectory may be represented as a score corresponding to each second predicted trajectory. A lower score corresponding to each second predicted trajectory may indicate that the second predicted trajectory is better, that is, indicate that a policy of inferring the second predicted trajectory is better. Certainly, it may be set that a higher score corresponding to each second predicted trajectory indicates that the second predicted trajectory is better. This is not specifically limited in this embodiment of this application.

For example, a reference factor in a specific implementation process of "determining the first score corresponding to the target predicted trajectory based on the state information of the first road user at the N moments after the moment t" may include any one or more of the following: a risk score corresponding to each second predicted trajectory, a comfort score corresponding to each second predicted trajectory, a passability score corresponding to each second predicted trajectory, an offset score corresponding to each second predicted trajectory, another factor, or the like. This is not limited in this embodiment of this application.

For further understanding of this solution, the following separately describes in detail methods for determining the foregoing four reference factors: "risk score", "comfort score", "passability score", and "offset score" by using the target predicted trajectory (namely, any one of the at least one second predicted trajectory) as an example.

(1) Risk score

Optionally, a lower risk score corresponding to the target predicted trajectory indicates a higher security degree of the target predicted trajectory; and a higher risk score corresponding to the target predicted trajectory indicates a lower security degree of the target predicted trajectory.

The ego vehicle may determine, based on the target predicted trajectory and the state information of the first road user at the N moments after the moment t, a score in at least one dimension related to security, and perform weighted summation on the score in the at least one dimension related to security, to obtain the risk score corresponding to the target predicted trajectory. For example, the at least one dimension related to security may include: at least one collision time difference between the target predicted trajectory and the first road user at the N moments after the moment t, at least one smallest distance between the target predicted trajectory and the first road user at the N moments after the moment t, at least one collision speed between the target predicted trajectory and the first road user at the N moments after the moment t, other information, and/or the like. Examples are not exhaustively listed herein.

For example, in an implementation, the state information of the first road user at each of the N moments after the moment t may include one or more pieces of sub-state information, and each piece of sub-state information indicates a reachable location of the first road user, a probability of the reachable location, a speed of the first road user, an acceleration of the first road user, and a steering angle of the first road user. The ego vehicle may determine a collision time difference corresponding to each piece of sub-state information of the first road user at each of the N moments based on the sub-state information of the first road user at each moment after the moment t. The ego vehicle may determine a score corresponding to each collision time difference based on the collision time difference corresponding to each piece of sub-state information, and obtain a sub-score of the target predicted trajectory in the dimension of "collision time difference" based on the score corresponding to each collision time difference. The sub-score corresponds to the target predicted trajectory and the first road user. The ego vehicle repeatedly performs the foregoing steps for at least one time, to obtain a sub-score corresponding to each road user, and further, may determine a score of the target predicted trajectory in the dimension of "collision time difference" based on the sub-score corresponding to each road user.

For ease of understanding of a process of obtaining "the score corresponding to each collision time difference", any one of a plurality of pieces of sub-state information of the first road user at the N moments is referred to as target sub-state information herein. The target sub-state information is included in state information of the first road user at an $n^{th}$ moment after the moment t, and the $n^{th}$ moment after the moment t is one of the N moments after the moment t. For example, the ego vehicle may perform uniform speed inference on the first road user based on a reachable location, a speed, an acceleration, and a steering angle that are indicated by the target sub-state information, to obtain a target intersection point (namely, a target intersection point corresponding to the target sub-state information) between the first road user and the target predicted trajectory. The ego vehicle may learn, based on the target predicted trajectory, that the ego vehicle arrives at the target intersection point at a first time point after the moment t, and determine a first time difference between the $n^{th}$ moment and the first time point. The ego vehicle may determine, based on the target sub-state information, that the first road user is to arrive at the target intersection point at a second time point, and determine a second time difference between the $n^{th}$ moment and the second time point. The ego vehicle may determine an absolute value of a difference between the first time difference and the second time difference as a collision time difference corresponding to the target sub-state information, and further, may determine a score corresponding to the collision time difference. Optionally, a smaller collision time difference indicates a higher score corresponding to each collision time difference, and a larger collision time difference indicates a lower score corresponding to each collision time difference.

For example, after obtaining the score corresponding to each collision time difference based on the target predicted trajectory and the state information of the first road user at each of the N moments after the moment t, the ego vehicle may perform weighted summation on scores corresponding to all collision time differences obtained based on the target predicted trajectory and the state information of the first road user at each of the N moments after the moment t, to obtain a sub-score corresponding to the target predicted trajectory and the first road user.

In another implementation, the "collision time difference" determined based on the target predicted trajectory and the state information of the first road user at each of the N moments after the moment t may be further understood as follows: When the target predicted trajectory overlaps with at least one of all reachable locations of the first road user at each moment after the moment t, the ego vehicle may obtain at least one collision time difference in one-to-one correspondence with the at least one overlapping reachable location.

For ease of description, any one of the at least one overlapping reachable location is referred to as a target reachable location herein. A collision time difference corresponding to the target reachable location represents an absolute value of a difference between "a third time point at which the ego vehicle arrives at the target reachable location and that is determined based on the target predicted trajectory" and "a fourth time point at which the first road user arrives at the target reachable location and that is determined based on the state information of the first road user within the N moments after the moment t". For a meaning of a collision time difference corresponding to each of the at least one overlapping reachable location, refer to the foregoing meaning of "the collision time difference corresponding to the target reachable location" for understanding.

For example, the ego vehicle may obtain scores of all of the at least one collision time difference in one-to-one correspondence with the at least one overlapping reachable location, and perform weighted summation on the scores corresponding to all of the at least one collision time difference, to obtain a sub-score of the target predicted trajectory in the dimension of "collision time difference". The foregoing sub-score corresponds to the target predicted trajectory and the first road user. "A weight of the score corresponding to each collision time difference" may be "a probability that corresponds to an overlapping reachable location corresponding to each collision time difference and that is included in the state information of the first road user at the N moments after the moment t". Optionally, when each of the at least one collision time difference is larger, the sub-score of the target predicted trajectory in the dimension of "collision time difference" is lower; and when each of the at least one collision time difference is smaller, the sub-score of the target predicted trajectory in the dimension of "collision time difference" is higher.

The ego vehicle repeatedly performs the foregoing steps for at least one time, to obtain a sub-score corresponding to each road user in the dimension of "collision time difference", and further, may determine the score of the target predicted trajectory in the dimension of "collision time difference" based on the sub-score corresponding to each road user in the dimension of "collision time difference".

The "at least one smallest distance" may include a smallest distance between the target predicted trajectory and the first road user at each moment after the moment t. In other words, the "at least one smallest distance" may include N distances in one-to-one correspondence with the N moments after the moment t.

For example, the ego vehicle may determine, based on the target predicted trajectory and the state information of the first road user at the N moments after the moment t, a reachable location that is of the first road user at each moment after the moment t and that is closest to the target predicted trajectory, and obtain a probability corresponding to the reachable location. The ego vehicle may score each of the N distances, and perform weighted summation on scores of the N distances, to obtain a sub-score of the target predicted trajectory in the dimension of "smallest distance". A weight corresponding to a score of each of the N distances may be a probability of a reachable location corresponding to the distance. The sub-score in the dimension of "smallest distance" corresponds to the target predicted trajectory and the first road user. Optionally, when each of the N distances is larger, the sub-score of the target predicted trajectory in the dimension of "smallest distance" is lower, and when each of the N distances is smaller, the sub-score of the target predicted trajectory in the dimension of "smallest distance" is higher.

The ego vehicle repeatedly performs the foregoing steps for at least one time, to obtain a sub-score corresponding to each road user in the dimension of "smallest distance", and further, may determine the score of the target predicted trajectory in the dimension of "smallest distance" based on the sub-score corresponding to each road user in the dimension of "smallest distance".

The "at least one collision speed" represents a relative speed between a predicted speed of the ego vehicle and a predicted speed of the first road user at each overlapping reachable location when the target predicted trajectory overlaps with at least one of all reachable locations of the first road user within the N moments after the moment t. It should be noted that, if the target predicted trajectory overlaps with none of the reachable locations of the first road user at the N moments after the moment t, there is no collision speed.

For example, the ego vehicle may obtain scores of all of the at least one collision speed, and perform weighted summation on the scores of all of the at least one collision speed, to obtain a sub-score of the target predicted trajectory in the dimension of "collision speed". "A weight of the score corresponding to each collision speed" may be "a probability that corresponds to an overlapping reachable location corresponding to each collision speed and that is included in the state information of the first road user at the N moments after the moment t". The sub-score in the dimension of "collision speed" corresponds to the target predicted trajectory and the first road user. Optionally, when each of the at least one collision speed is smaller, the sub-score of the target predicted trajectory in the dimension of "collision speed" is lower; and when each of the at least one collision speed is larger, the sub-score of the target predicted trajectory in the dimension of "collision speed" is higher.

The ego vehicle repeatedly performs the foregoing steps for at least one time, to obtain a sub-score corresponding to each road user in the dimension of "collision speed", and further, may determine the score of the target predicted trajectory in the dimension of "collision speed" based on the sub-score corresponding to each road user in the dimension of "collision speed".

(2) Comfort score

In a travelling process of the ego vehicle, the ego vehicle tends to maintain a current moving state. Therefore, in a process in which the ego vehicle advances based on the target predicted trajectory, when a change degree of the moving state of the ego vehicle is larger, it proves that comfort when the ego vehicle travels based on the target predicted trajectory is lower, and therefore, a comfort score corresponding to the target predicted trajectory is higher; or when a change of the moving state of the ego vehicle is smaller, it proves that comfort when the ego vehicle travels based on the target predicted trajectory is higher, and therefore, a comfort score corresponding to the target predicted trajectory is lower. An indicator indicating the moving state of the ego vehicle may include any one or more of the following: an acceleration, a steering angle, a speed, other information, or the like. This is not limited herein.

Optionally, the ego vehicle may determine the comfort score corresponding to the target predicted trajectory based on an acceleration of the ego vehicle at the moment t and an acceleration used when the ego vehicle advances based on the target predicted trajectory. A larger difference between the acceleration of the ego vehicle at the moment t and the acceleration used when the ego vehicle advances based on the target predicted trajectory indicates a higher comfort score corresponding to the target predicted trajectory.

For example, fourth mapping information may be deployed in the ego vehicle, and the fourth mapping information indicates a score corresponding to each of a plurality of first difference ranges. After determining a first difference between the acceleration at the moment t and the acceleration used during advancing based on the target predicted trajectory, the ego vehicle may determine, based on the fourth mapping information, that the first difference belongs to a target difference range in the plurality of first difference ranges, obtain a score corresponding to the target difference range from the fourth mapping information, and determine the score as the comfort score corresponding to the target predicted trajectory.

(3) Passability score

For example, in an implementation, a preset acceleration may be deployed in the ego vehicle, and the ego vehicle may obtain a passability score corresponding to the target predicted trajectory based on a difference between the acceleration used when the ego vehicle travels based on the target predicted trajectory and the preset acceleration.

Optionally, when the acceleration used during travelling based on the target predicted trajectory is greater than or equal to the preset acceleration, the passability score corresponding to the target predicted trajectory is a second score; or when the acceleration used during travelling based on the target predicted trajectory is less than the preset acceleration, the passability score corresponding to the target predicted trajectory is a third score. The third score is greater than the second score.

For example, when the acceleration used during travelling based on the target predicted trajectory is greater than or equal to the preset acceleration, the passability score corresponding to the target predicted trajectory is 0; or when the acceleration used during travelling based on the target predicted trajectory is less than the preset acceleration, the passability score corresponding to the target predicted trajectory is greater than 0.

In another implementation, the ego vehicle may determine an intersection point and/or a potential conflict point between the target predicted trajectory of the ego vehicle and at least one predicted trajectory of all of the at least one road user based on at least one predicted trajectory of each of the at least one road user. The ego vehicle compares "a time period consumed when the ego vehicle maintains a speed at the moment t and passes through the interaction point and/or the potential conflict point at a constant speed" and "a time period consumed by passing through the interaction point and/or the potential conflict point based on the target predicted trajectory". If "the time period consumed when the ego vehicle maintains the speed at the moment t and passes through the interaction point and/or the potential conflict point at the constant speed" is less than or equal to "the time period consumed by passing through the interaction point and/or the potential conflict point based on the target predicted trajectory", the ego vehicle determines that a travelling cost of the target predicted trajectory is low, and may determine that a passability score corresponding to the target predicted trajectory is 0; or if "the time period consumed when the ego vehicle maintains the speed at the moment t and passes through the interaction point and/or the potential conflict point at the constant speed" is greater than "the time period consumed by passing through the interaction point and/or the potential conflict point based on the target predicted trajectory", the ego vehicle determines that a travelling cost of the target predicted trajectory is high, and may determine that a passability score corresponding to the target predicted trajectory is greater than 0.

It should be noted that, the ego vehicle may further determine the passability score corresponding to the target predicted trajectory in another manner. The example herein is merely for ease of understanding of this solution, and is not intended to limit this solution.

(4) Offset score

The ego vehicle may further obtain an offset by which the ego vehicle needs to deviate from a center line of a current lane when the ego vehicle advances based on the target predicted trajectory. When the offset is larger, an offset score corresponding to the target predicted trajectory is higher.

The ego vehicle may perform weighted summation on the risk score, the comfort score, the passability score, and the offset score that correspond to the target predicted trajectory, to obtain the first score of the target predicted trajectory. For example, weights of the risk score, the comfort score, the passability score, and the offset score that correspond to the target predicted trajectory may be the same or different. This may be specifically determined flexibly based on an actual situation. This is not limited herein.

The ego vehicle may repeatedly perform the foregoing steps for a plurality of times, until a first score (namely, evaluation information of each second predicted trajectory) of each of the at least one second predicted trajectory is obtained. That is, a first score of a policy corresponding to each second predicted trajectory is obtained.

In this embodiment of this application, evaluation information of each predicted trajectory of the ego vehicle at the N moments after the moment t may be further generated based on the state information of the road user at the N moments after the moment t, instead of directly screening out the reachable location of the road user at the N moments after the moment t from a travelling route of the ego vehicle. This helps expand exploration space in the travelling process of the ego vehicle, and helps plan a better route of the ego vehicle.

209: Plan a trajectory of the ego vehicle.

In this embodiment of this application, step 207 and step 208 are optional steps. If step 207 and step 208 are performed, step 209 may include: The ego vehicle plans the trajectory of the ego vehicle based on the evaluation information of each second predicted trajectory.

For example, after obtaining the first score of each second predicted trajectory, the ego vehicle may determine a second predicted trajectory with a lowest score from the at least one second predicted trajectory of the ego vehicle. Further, the ego vehicle may plan a route of the ego vehicle based on the second predicted trajectory with the lowest score and the sub-state information of each of the at least one road user at the N moments after the moment t.

Alternatively, after obtaining the first score of each second predicted trajectory, the ego vehicle obtains a first score of each policy in a policy set, and may determine a policy with a lowest score from the policy set. Further, the ego vehicle may plan the route of the ego vehicle based on the policy with the lowest score and the sub-state information of each of the at least one road user at the N moments after the moment t.

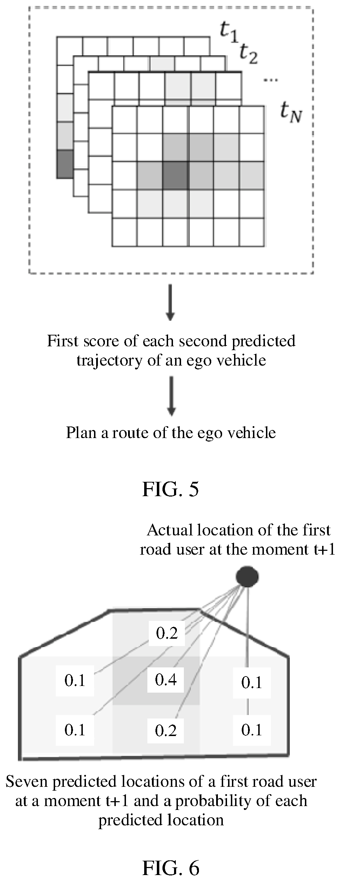

For more intuitive understanding of this solution, FIG. 5 is a diagram of planning a route of an ego vehicle based on state information at N moments after a moment t according to an embodiment of this application. In FIG. 5, for example, the at least one road user includes one road user that is a risk to the ego vehicle and has a game-theoretic relationship with the ego vehicle. In FIG. 5, $t_1$, $t_2$, ..., and $t_N$ each represent the state information of the road user at each of the N moments after the moment t. The ego vehicle may generate the first score of each second predicted trajectory of the ego vehicle based on the state information of the road user at each of N moments after the moment t, that is, obtain the first score corresponding to each policy in the policy set of the ego vehicle. The ego vehicle may plan the route of the ego vehicle based on the policy with the lowest score in the policy set and the state information of the road user at each of the N moments after the moment t. It should be understood that the example in FIG. 5 is merely for ease of understanding of this solution, and is not intended to limit this solution.

If step 207 and step 208 are not performed, the ego vehicle may further determine, based on the state information of the road user at the N moments after the moment t, a reachable location that is of the road user within the N moments after the moment t and whose probability is greater than or equal to a probability threshold, and remove the reachable location whose probability is greater than or equal to the probability threshold from an advancing route of the road user, to plan the trajectory of the ego vehicle.

210: Update a first parameter based on one or more reachable locations of the road user at a target moment and a location of the road user at the target moment, where the target moment includes one or more moments after the moment t, and the first parameter includes at least one parameter used in a process of generating a transition probability corresponding to the road user.

In this embodiment of this application, step 209 is an optional step. The target moment may include one or more of the N moments after the moment t. Optionally, the first parameter may include at least one parameter used in a process of generating the first adjustment coefficient, and/or at least one parameter used in a process of generating the second adjustment coefficient.

For example, the first parameter may include $\lambda_a^1$ and $\lambda_a^2$ in Formula (2), and may further include $\Delta_{\text{ref}}$ in Formula (4). It should be understood that the examples herein are merely used to facilitate understanding of this solution, and are not intended to limit this solution.

In an implementation, the ego vehicle may alternatively evaluate, based on an actual location of each road user at T consecutive moments after the moment t, state information that is of each road user at the T consecutive moments after the moment t and that is obtained in the foregoing step, to obtain a first parameter value of at least one evaluation indicator. The first parameter value of the at least one evaluation indicator indicates a coverage status of the state information of each road user at the T consecutive moments after the moment t for the actual location of the road user at the T consecutive moments after the moment t. T is an integer greater than or equal to 1 and less than or equal to N. A specific value of T may be determined based on an actual situation, and is not limited herein. The first parameter is updated based on the first parameter value of the at least one evaluation indicator.

Alternatively, the ego vehicle may evaluate, based on an actual location of each road user at the moment t+1, state information that is of each road user at the moment t+1 and that is obtained in the foregoing step, to obtain a second parameter value of at least one evaluation indicator. The second parameter value of the at least one evaluation indicator indicates a coverage status of the state information of each road user at the moment t+1 for the actual location of the road user at the moment t+1. The first parameter is updated based on the second parameter value of the at least one evaluation indicator.

Optionally, the ego vehicle may alternatively evaluate, based on an actual location of each road user at a moment t+2, state information that is of each road user at the moment t+2 and that is obtained in the foregoing step, to obtain a first parameter value of at least one evaluation indicator. The first parameter value of the at least one evaluation indicator indicates a coverage status of the state information of each road user at the moment t+2 for the actual location of the road user at the moment t+2. The first parameter is updated based on the first parameter value of the at least one evaluation indicator.

By analogy, the ego vehicle may alternatively update the first parameter, and the like based on an actual location of each road user at a moment t+3, until the first parameter is updated based on an actual location of each road user at a moment t+N.

It should be understood that the target moment may include any one or more of the N moments after the moment t. Specifically, the first parameter is updated based on an actual location of each road user at a specific moment, and may be flexibly determined based on an actual application scenario. This is not limited herein.

For example, the "at least one evaluation indicator" may include any one or more of the following evaluation indicators: a coverage rate, a geometric deviation, a deviation expectation, and another evaluation indicator. This is not limited in this application.

For further understanding of this solution, the following separately discloses calculation formulas of the coverage rate, the geometric deviation, and the deviation expectation. Herein, descriptions are provided by using an example in which a coverage rate corresponding to the first road user (namely, any one of the at least one road user) represents a probability that the actual location of the first road user at the T moments after the moment t is included in the at least one reachable location of the first road user at the T moments after the moment t; a geometric deviation corresponding to the first road user represents a probability expectation of a distance between a boundary of the actual location of the first road user at the T moments after the moment t and a boundary of the at least one reachable location of the first road user at the T moments after the moment t; and a deviation expectation corresponding to the first road user represents a probability expectation of a distance between the actual location of the first road user at the T moments after the moment t and the at least one reachable location of the first road user at the T moments after the moment t.

$$E_1 = \frac{1}{T}\sum_{k=1,2,\ldots,T} I(x(t_k)) \in Conv(X(t_k)) \qquad (6)$$

$$E_2(t_k) = \begin{cases} 0 & \text{if } x(t_k) \in Conv(X(t_k)) \\ \|x(t_k) - \partial Conv(X(t_k))\| & \text{if } x(t_k) \notin Conv(X(t_k)) \end{cases} \qquad (7)$$

$$E_3 = \frac{1}{T}\sum_{k=1,2,\ldots,T} E_2(t_k) \qquad (8)$$

$$E_4 = \frac{1}{T}\sum_{k=1,2,\ldots,T}\sum_{x_i \in X(t_k)} p(x_i, t_k)\, \|x_i - x(t_k)\| \qquad (9)$$

Herein, $E_1$ represents the coverage rate, $E_2(t_k)$ represents a geometric deviation at the $k^{th}$ moment after the moment t, $E_3$ represents the geometric deviation, $E_4$ represents the deviation expectation, T represents that the target moment includes the T moments after the moment t, $x(t_k)$ represents an actual location of the first road user at the $k^{th}$ moment after the moment t, $I(x(t_k))$ is an indicator function, $X(t_k)$ represents a plurality of reachable locations of the first road user at the $k^{th}$ moment after the moment t, $Conv(X(t_k))$ represents a convex hull including the plurality of reachable locations of the first road user at the $k^{th}$ moment after the moment t, $\partial Conv(X(t_k))$ represents a boundary of the convex hull including the plurality of reachable locations of the first road user at the $k^{th}$ moment after the moment t, $x_i$ represents any reachable location of the first road user at the $k^{th}$ moment after the moment t, and $p(x_i, t_k)$ represents a probability of each of the plurality of reachable locations of the first road user at the $k^{th}$ moment after the moment t. It should be understood that examples in Formula (6) to Formula (9) are merely used for ease of understanding of this solution, and are not intended to limit this solution.

For more intuitive understanding of this solution, FIG. 6 is a diagram of all reachable locations of a road user at a moment t+1, a probability corresponding to each reachable location, and an actual location of the road user at the moment t+1 according to an embodiment of this application. FIG. 6 shows seven reachable locations of the first road user at the moment t+1 (namely, 0.5s after the moment t). Probabilities corresponding to the seven reachable locations are respectively [0.1, 0.1, 0.2, 0.4, 0.2, 0.1, 0.1], distances between the actual location of the first road user at the moment t+1 and the seven reachable locations are respectively [2.1, 1.8, 0.9, 1.4, 1.7, 0.9, 1.3], and a distance between a boundary of a convex hull including the seven reachable locations and the actual location of the first road user at the moment t+1 is 0.5. It should be understood that, the example in FIG. 6 is merely for ease of understanding of this solution, and is not intended to limit this solution. Based on the case shown in FIG. 6, it can be learned that the actual location of the first road user at the moment t+1 is not covered by the seven reachable locations of the first road user at the moment t+1. In this case, a coverage rate of all reachable locations at the moment t+1 for the actual location is 0, an expected deviation is 1.69, and a geometric deviation is 0.5. It should be understood that the example in FIG. 6 is merely for ease of understanding of this solution, and is not intended to limit this solution.

In this embodiment of this application, that the first parameter includes the at least one parameter used in the process of generating the transition probability corresponding to the road user is that the first parameter includes a parameter used in a process of generating state information of the road user after the moment t. The first parameter is updated based on an actual location of the road user at the one or more moments after the moment t and a reachable location of the road user at the one or more moments after the moment t. In other words, a parameter used in a process of generating the reachable location of the road user at the one or more moments after the moment t is adjusted based on the actual location of the road user at the one or more moments after the moment t. This helps subsequently generate a more accurate reachable location of the road user.

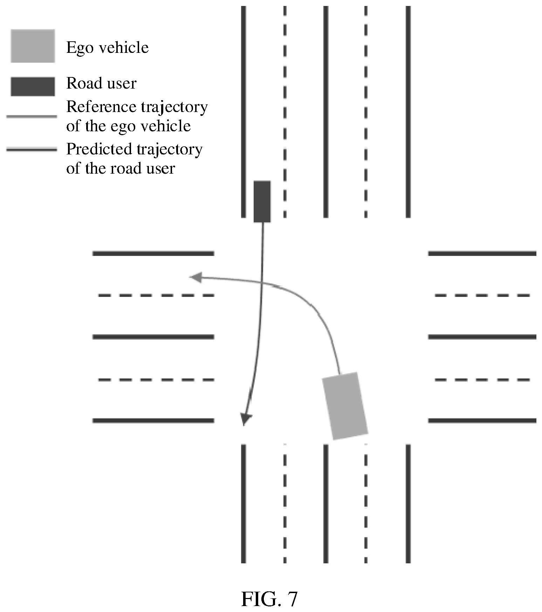

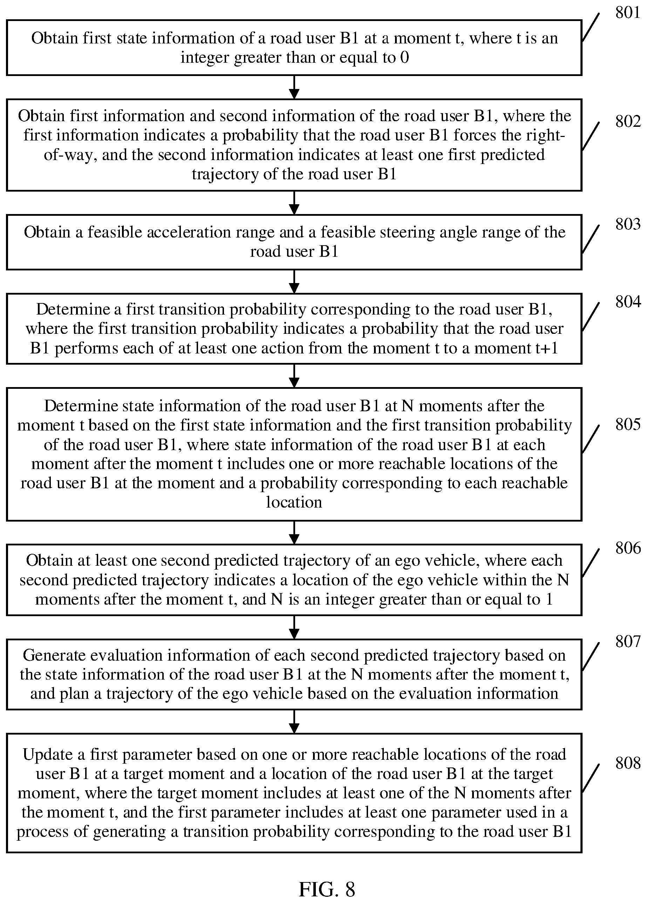

To further understand this solution, the following shows a specific embodiment of a trajectory planning method according to this application with reference to FIG. 7 and FIG. 8. FIG. 7 is a diagram of a traffic scenario in which an ego vehicle is located according to an embodiment of this application. The ego vehicle is located at an unprotected crossroad, the ego vehicle is located in a left-turn lane, and a road user B1 is located on a straight lane opposite to the ego vehicle. As shown in FIG. 7, there is a conflict between a planned route (that is, turning left in FIG. 7) of the ego vehicle and a predicted route (that is, going straight in FIG. 7) of the road user B1. In other words, the ego vehicle and the road user B1 may collide at an intersection point shown in FIG. 7. In the scenario shown in FIG. 7, a reachable location of the road user B1 after a moment t may be obtained in the trajectory planning method provided in this application. FIG. 8 is another schematic flowchart of a trajectory planning method according to this application. The trajectory planning method provided in this embodiment of this application may include the following steps.

801: Obtain first state information of a road user B1 at a moment t, where t is an integer greater than or equal to 0.

In this embodiment of this application, optionally, the road user in the embodiment corresponding to FIG. 8 may be a vulnerable road user. For a definition of the vulnerable road user, refer to the foregoing descriptions. Details are not described herein again.

When the ego vehicle is located at a crossing shown in FIG. 7, it may be identified that the road user B1 is a road user that is a risk to the ego vehicle, and the road user B1 has game-theoretic interaction with the ego vehicle. The ego vehicle may obtain the first state information of the road user B1 at the moment t (namely, a current moment). The first state information of the road user B1 at the moment t may include a location, a speed, an acceleration, and a steering angle of the road user B1 at the moment t. For example, the speed of the road user B1 at the moment t is 4.0 m/s.

802: Obtain first information and second information of the road user B1, where the first information indicates a probability that the road user B1 forces the right-of-way, and the second information indicates at least one first predicted trajectory of the road user B1.

In this embodiment of this application, step 802 is an optional step. For example, the probability that the road user B1 forces the right-of-way may be 0.6, and a first predicted trajectory of the road user B1 may be shown in FIG. 7.

803: Obtain a feasible acceleration range and a feasible steering angle range of the road user B1.

In this embodiment of this application, step 803 is an optional step. After determining that the speed of the road user B1 at the moment t is 4.0 m/s, the ego vehicle may determine, in a table lookup method, that the feasible acceleration range of the road user B1 is [-1.5 m/s$^2$, 1.5 m/s$^2$].

The ego vehicle may determine, in the table lookup method, that an allowable largest degree of inclination of the road user B1 is 20°, that is, determine that an allowable degree of inclination range of the road user B1 is 0 to 20°. The ego vehicle learns, based on the allowable degree of inclination range of the road user B1, that a feasible degree range of the steering angle of the road user B1 is [-12.56, 12.56].

804: Determine a first transition probability corresponding to the road user B1, where the first transition probability indicates a probability that the road user B1 performs each of at least one action from the moment t to a moment t+1.

In this embodiment of this application, the first transition probability is obtained based on a second transition probability and/or a third transition probability. The second transition probability indicates a probability that the road user B1 uses a first acceleration from the moment t to the moment t+1. For example, the second transition probability may include a plurality of second transition probability values in one-to-one correspondence with a plurality of acceleration values, and each second transition probability value represents a probability that the road user B1 uses one of the plurality of acceleration values from the moment t to the moment t+1. The third transition probability indicates a probability that the road user B1 uses the first steering angle from the moment t to the moment t+1. The third transition probability may include a plurality of third transition probability values in one-to-one correspondence with the plurality of steering angles. Each third transition probability value represents a probability that the road user B1 uses one of the plurality of steering angles from the moment t to the moment t+1.

The ego vehicle performs discretization processing on the feasible acceleration range of the road user B1, to obtain a plurality of feasible accelerations of the road user B1, including [-1.5 m/s$^2$, -0.9 m/s$^2$, -0.3 m/s$^2$, 0 m/s$^2$, 0.3 m/s$^2$, 0.9 m/s$^2$, 1.5 m/s$^2$].

In this embodiment, an example in which a plurality of first probabilities corresponding to a plurality of feasible accelerations of the road user B1 from the moment t to the moment t+1 comply with a normal distribution is used. It is determined that an expectation of the normal distribution is 0.2 m/s$^2$, and a standard deviation of the normal distribution is (1.5-(-1.5))/4=0.75. In this case, the plurality of first probabilities in one-to-one correspondence with the feasible accelerations [-1.5 m/s$^2$, -0.9 m/s$^2$, -0.3 m/s$^2$, 0 m/s$^2$, 0.3 m/s$^2$, 0.9 m/s$^2$, 1.5 m/s$^2$] of the road user B1 are [0.016, 0.072, 0.180, 0.205, 0.210, 0.137, 0.047], and the plurality of probability values are normalized, to obtain the plurality of first probabilities [0.018, 0.084, 0.198, 0.239, 0.245, 0.159, 0.055] in one-to-one correspondence with the plurality of feasible accelerations of the road user B1.

A first adjustment coefficient corresponding to each of the plurality of feasible accelerations of the road user B1 may be obtained by weighting $\lambda_a^1$ and $\lambda_a^2$. For example, the first adjustment coefficient corresponding to each acceleration may be obtained based on Formula $\lambda_a = (1 - p)\lambda_a^1 + p\lambda_a^2$. A weight of $\lambda_a^2$ is the first information (that is, p=0.6) of the road user B1, and a weight of $\lambda_a^1$ is 0.4 (that is, 1-0.6). Each of the plurality of feasible accelerations of the road user B1 may correspond to a different value of $\lambda_a^1$. For example, a plurality of values of $\lambda_a^1$ in one-to-one correspondence with the feasible accelerations [-1.5 m/s$^2$, -0.9 m/s$^2$, -0.3 m/s$^2$, 0 m/s$^2$, 0.3 m/s$^2$, 0.9 m/s$^2$, 1.5 m/s$^2$] of the road user B1 may be [-0.7, -0.2, 0.3, 0.8, 1.3, 1.8, 2.3]. Each of the plurality of feasible accelerations of the road user B1 may correspond to a different value of $\lambda_a^2$. For example, a plurality of values of $\lambda_a^2$ in one-to-one correspondence with the plurality of feasible accelerations [-1.5 m/s$^2$, -0.9 m/s$^2$, -0.3 m/s$^2$, 0 m/s$^2$, 0.3 m/s$^2$, 0.9 m/s$^2$, 1.5 m/s$^2$] of the road user B1 may be [2.7, 2.2, 1.7, 1.2, 0.7, 0.2, -0.3]. It may be learned, based on Formula $\lambda_a = (1 - p)\lambda_a^1 + p\lambda_a^2$ , that a plurality of first adjustment coefficients in one-to-one correspondence with the plurality of feasible accelerations of the road user B1 are [0.66, 0.76, 0.86, 0.96, 1.06, 1.16, 1.26].

The ego vehicle multiplies a first probability corresponding to each feasible acceleration of the road user B1 by the first adjustment coefficient, and performs normalization processing to obtain the plurality of probability values [0.013, 0.06, 0.17, 0.23, 0.26, 0.19, 0.07] in one-to-one correspondence with the plurality of feasible acceleration values [-1.5, -0.9, -0.3, 0, 0.3, 0.9, 1.5] of the road user B1. That is, second transition probabilities of the road user B1 from the moment t to the moment t+1 are [0.013, 0.06, 0.17, 0.23, 0.26, 0.19, 0.07].

The ego vehicle performs discretization processing on the feasible steering angle range of the road user B1, to obtain degrees [-12.56, -7.536, -2.512, 2.512, 7.536, 12.56] of the plurality of feasible steering angles of the road user B1.

In this embodiment, an example in which the plurality of second probabilities corresponding to the plurality of feasible steering angles of the road user B1 from the moment t to the moment t+1 comply with the normal distribution is used. Similarly, it may be learned that a plurality of second probabilities in one-to-one correspondence with degrees of the plurality of feasible steering angles of the road user B1 are [0.044, 0.158, 0.299, 0.299, 0.158, 0.044].

When it is assumed that an acceleration of the road user B1 remains unchanged, the ego vehicle traverses all feasible steering angles, and performs inference based on a kinematic feature of the road user B1, to calculate a location that is of the road user B1 and that corresponds to each feasible steering angle at the moment t+1 and a smallest distance between the location and a first predicted trajectory of the road user B1. For example, when the acceleration of the road user B1 is -1.5, a first distance between the location that is of the road user B1 and that corresponds to each feasible steering angle at the moment t+1 and a first predicted trajectory of the road user B1 is calculated as [-0.24 m, -0.12 m, 0.05 m, 0.13 m, 0.20 m, 0.31 m]. The plurality of second adjustment coefficients that are in one-to-one correspondence with the plurality of feasible degrees [-12.56, -7.536, -2.512, 2.512, 7.536, 12.56] of the steering angle of the road user B1 and that can be obtained based on the plurality of first distances are [0.79, 0.94, 0.99, 0.93, 0.85, 0.68], and the plurality of second adjustment coefficients are [0.15, 0.18, 0.19, 0.18, 0.16, 0.13] after normalization processing is performed. [0.044, 0.158, 0.299, 0.299, 0.158, 0.044].

For example, a formula used in a process of calculating the plurality of second adjustment coefficients may be $\lambda_{\alpha\beta} = e^{-\left(\frac{\Delta}{\Delta_{ref}}\right)^2}$ . Herein, $\lambda_{\alpha\beta}$ represents one second adjustment coefficient, $\Delta_{ref} = 0.5m$ , and $\Delta$ represents the first distance. It should be understood that the examples herein are merely for ease of understanding of this solution, and are not intended to limit this solution.

The ego vehicle multiplies a second probability corresponding to each feasible steering angle of the road user B1 by the second adjustment coefficient, and performs normalization processing to obtain the plurality of probability values [0.04, 0.16, 0.32, 0.30, 0.15, 0.03] in one-to-one correspondence with the plurality of feasible steering angles of the road user B1. That is, third transition probabilities of the road user B1 from the moment t to the moment t+1 are [0.04, 0.16, 0.32, 0.30, 0.15, 0.03].

Because a plurality of transition probability values in one-to-one correspondence with the plurality of feasible acceleration values [-1.5, -0.9, -0.3, 0, 0.3, 0.9, 1.5] of the road user B1 are [0.013, 0.06, 0.17, 0.23, 0.26, 0.19, 0.07], and a plurality of transition probability values in one-to-one correspondence with the plurality of feasible steering angles [-12.56, -7.536, -2.512, 2.512, 7.536, 12.56] of the road user B1 are [0.04, 0.16, 0.32, 0.30, 0.15, 0.03], the ego vehicle may determine, based on the second transition probability and the third transition probability, a transition probability that the road user B1 performs each of a plurality of joint actions from the moment t to the moment t+1. For example, a transition probability that a joint action may be using an acceleration value -1.5 and a steering angle -12.56 may be a product 0.0005 of 0.013 and 0.04. For another example, a transition probability that a joint action may be using an acceleration value -1.5 and a steering angle -7.536 may be a product 0.0021 of 0.013 and 0.16, and the like. Calculation of a transition probability of another feasible joint action of an acceleration and a steering angle is similar. For further understanding of this solution, the following discloses all transition probability values in the first transition probability in Table 1.

Table 1

| Acceleration / Steering angle | −1.5 | −0.9 | −0.3 | 0 | 0.3 | 0.9 | 1.5 |
|---|---|---|---|---|---|---|---|
| −12.56 | 0.0005 | 0.0024 | 0.0068 | 0.0092 | 0.0104 | 0.0076 | 0.0028 |

| −7.536 | 0.0021 | 0.0096 | 0.272 | 0.0368 | 0.0416 | 0.0304 | 0.0112 |
|---|---|---|---|---|---|---|---|
| −2.512 | 0.0042 | 0.0192 | 0.0544 | 0.0736 | 0.0832 | 0.0608 | 0.0224 |
| 2.512 | 0.0039 | 0.018 | 0.051 | 0.069 | 0.078 | 0.057 | 0.021 |
| 7.536 | 0.0019 | 0.009 | 0.0255 | 0.0345 | 0.039 | 0.0285 | 0.0105 |
| 12.56 | 0.0004 | 0.0018 | 0.0051 | 0.0069 | 0.0078 | 0.0057 | 0.0021 |

The example in Table 1 is merely for ease of understanding of this solution, and is not intended to limit this solution. Each value in Table 1 represents a transition probability value when the road user B1 uses an acceleration and a steering angle. For example, a transition probability value when the road user B1 uses an acceleration -0.3 and a steering angle -2.512 is 0.0544. For another example, a transition probability value when the road user B1 uses an acceleration 0 and a steering angle 2.512 is 0.069. For another example, a transition probability value when the road user B1 uses an acceleration 0.3 and a steering angle 12.56 is 0.0078. Meanings of all values shown in Table 1 are not explained herein, and may be understood with reference to Table 1.

805: Determine state information of the road user B1 at N moments after the moment t based on the first state information and the first transition probability of the road user B1, where state information of the road user B1 at each moment after the moment t includes one or more reachable locations of the road user B1 at the moment and a probability corresponding to each reachable location.

In this embodiment of this application, after determining one piece of first state information of the road user B1 at the moment t, the ego vehicle may determine, based on a kinematics model, an action set that can be performed by the road user B1 from the moment t to the moment t+1, and perform state transition on the road user B1 based on the first transition probability of the road user B1 from the moment t to the moment t+1. A time step is 0.5s, and second state information within 0.5s after the moment t may be obtained. For example, 35 pieces of sub-state information of the road user B1 within 0.5s after the moment t may be obtained. The 35 pieces of sub-state information of the road user B1 within 0.5s after the moment t indicate 35 reachable locations of the road user B1 within 0.5s after the moment t and a probability corresponding to each reachable location. The 35 pieces of sub-state information are merged to obtain seven pieces of merged sub-state information, and jointly form the second state information of the road user B1 at the moment t+1.

The ego vehicle may traverse the seven pieces of sub-state information of the road user B1 at the moment t+1, and separately perform, based on each piece of sub-state information of the road user B1 at the moment t+1 and based on a Markov chain algorithm and the kinematics model, operations such as calculating a transition probability, determining a feasible action set of the user B1 from the moment t+1 to the moment t+2, and merging sub-state information, to obtain state information of the road user B1 at the moment t+2, and so on, until all state information of the road user B1 within the N moments after the moment t is obtained.

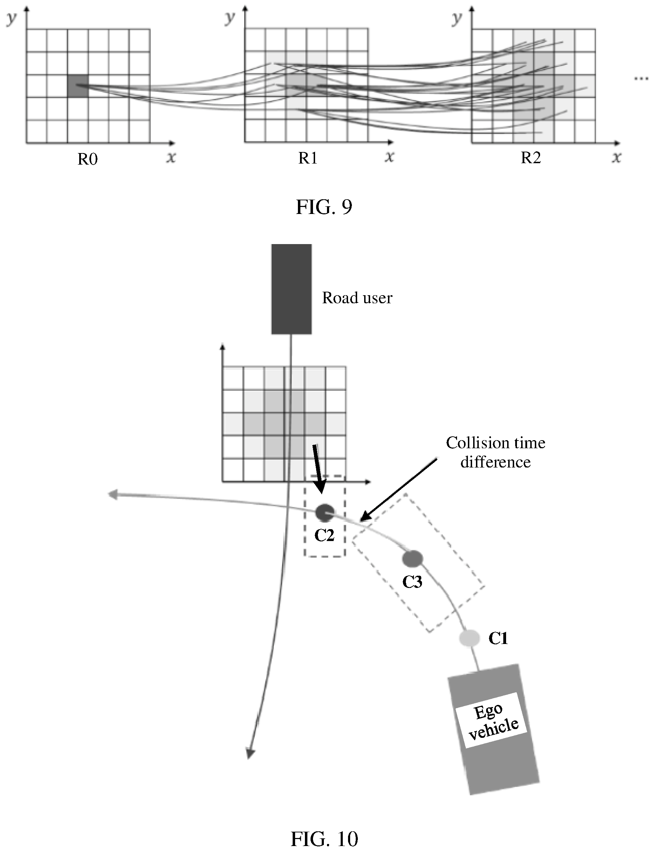

For more intuitive understanding of this solution, FIG. 9 is a diagram of state information of a road user B1 at a moment t, a moment t+1, and a moment t+2 according to an embodiment of this application. Each colored grid in FIG. 9 represents a reachable location of the road user B1. In FIG. 9, R0 represents state information of the road user B1 at the moment t, R1 represents state information of the road user B1 at the moment t+1, and R2 represents state information of the road user B1 at the moment t+2. As shown in FIG. 9, the ego vehicle obtains the state information of the road user B1 at the moment t+1 based on the state information of the road user B1 at the moment t. The state information of the road user B1 at the moment t+1 includes seven pieces of sub-state information in one-to-one correspondence with seven reachable locations. The ego vehicle obtains the state information of the road user B1 at the moment t+2 based on the seven pieces of sub-state information of the road user B1 at the moment t+1. The state information of the road user B1 at the moment t+2 includes 19 pieces of sub-state information in one-to-one correspondence with 19 reachable locations. It should be understood that the example in FIG. 9 is merely for ease of understanding of this solution, and is not intended to limit this solution.

806: Obtain at least one second predicted trajectory of the ego vehicle, where each second predicted trajectory indicates a location of the ego vehicle within the N moments after the moment t, and N is an integer greater than or equal to 1.

In this embodiment of this application, the ego vehicle may determine a feasible policy set of the ego vehicle, to infer a second predicted trajectory corresponding to each policy in the policy set. For example, a policy of the ego vehicle in a longitudinal direction may be represented by a value of an acceleration. In the scenario shown in FIG. 7, a speed of the ego vehicle at the moment t is 17 km/h, an acceleration of the ego vehicle at the moment t is -0.67 m/s$^2$, and a static speed limit of the road is 60 km/h. Based on a dynamic constraint of the ego vehicle, an allowable acceleration range of the ego vehicle is [-4.0 m/s$^2$, 2.0 m/s$^2$]. In consideration of a balance between calculation complexity and spatial precision of a sampling policy, an interval between different accelerations is set to 1 m/s$^2$.

A policy of the ego vehicle in a horizontal direction may be represented by using an offset of the ego vehicle in the horizontal direction. For example, when the ego vehicle continues to keep travelling along a center line of a current lane, it is considered that an offset of the ego vehicle is 0; when the ego vehicle avoids leftward, that is, deviates from a left side of the center line of the lane by 1 m, the offset is denoted as +1 m; and when the ego vehicle deviates from a right side of the center line of the lane by 1 m, the offset is denoted as -1 m.

The policy set of the ego vehicle may be obtained based on the policy in the longitudinal direction and the policy in the horizontal direction of the ego vehicle. For example, the policy set of the ego vehicle may include an acceleration -3 and an offset -1, an acceleration -3 and an offset 0, an acceleration -3 and an offset 1, an acceleration -2 and an offset -1, an acceleration -2 and an offset 0, an acceleration -2 and an offset 1, an acceleration -1 and an offset -1, an acceleration -1 and an offset 0, an acceleration -1 and an offset 1, an acceleration 0 and an offset -1, an acceleration 0 and an offset 0, an acceleration 0 and an offset 1, an acceleration 1 and an offset -1, an acceleration 1 and an offset 0, an acceleration 1 and an offset 1, an acceleration 2 and an offset -1, an acceleration 2 and an offset 0, and an acceleration 2 and an offset 1.

The ego vehicle may infer, based on each feasible policy in the policy set, a state of the ego vehicle at the N moments after the moment t, to obtain a plurality of second predicted trajectories of the ego vehicle. For example, a value of N may be 10. That is, each second predicted trajectory can indicate a reachable location of the ego vehicle within 5s after the moment t. It should be noted that the foregoing inference process needs to comply with constraint conditions such as a system delay of the ego vehicle and a road speed limit. After the ego vehicle accelerates to the road speed limit, it is assumed that the ego vehicle keeps advancing at a constant speed at a speed of the road speed limit.

807: Generate evaluation information of each second predicted trajectory based on the state information of the road user B1 at the N moments after the moment t, and plan a trajectory of the ego vehicle based on the evaluation information.

In this embodiment of this application, after obtaining the state information of the road user B1 at the N moments after the moment t and the at least one second predicted trajectory of the ego vehicle, the ego vehicle may generate the evaluation information of each second predicted trajectory, that is, generate evaluation information of a feasible policy that is of the ego vehicle and that correspond to each second predicted trajectory.

The ego vehicle may obtain state information of the road user B1 at each of 10 moments after the moment t, that is, obtain state information of the road user B1 at 0 seconds, 0.5 second, 1 second, 1.5 seconds, 2 seconds, 2.5 seconds, 3 seconds, 3.5 seconds, 4 seconds, 4.5 seconds, and 5 seconds after the moment t. The ego vehicle may generate the evaluation information of each second predicted trajectory of the ego vehicle from four perspectives: a risk score, a comfort score, a passability score, and an offset score. Evaluation information of a target predicted trajectory is generated below by using an example in which the target predicted trajectory (namely, any one of the at least one second predicted trajectory) is obtained based on the policy in which the acceleration is 1 and the offset is 0

(1) Risk score

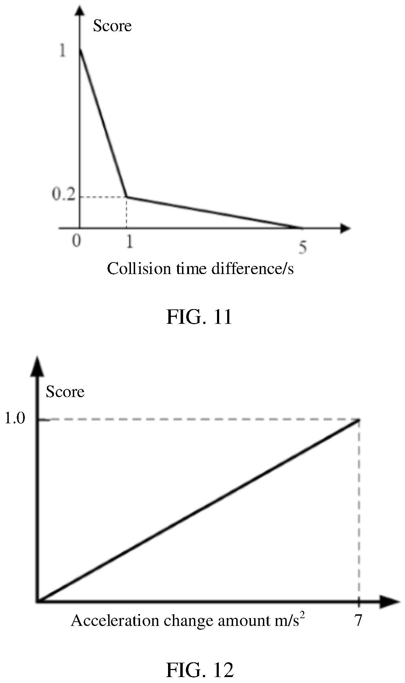

For more intuitive understanding of this solution, detailed descriptions are provided herein with reference to FIG. 10 and FIG. 11. First, FIG. 10 is a diagram of a collision time difference corresponding to one piece of sub-state information of a road user B1 at a moment after a moment t according to an embodiment of this application. In FIG. 10, an example in which the ego vehicle uses the acceleration 1 and the offset 0 is used. At 0.5s after the moment t, a reachable location of the ego vehicle at 0.5s after the moment t is shown as C1 in FIG. 10. 19 pieces of sub-state information of the road user B1 at 0.5s after the moment t are shown by 19 colored grids in FIG. 10. One piece of sub-state information (for ease of description, referred to as sub-state information 1 subsequently) introduced by an arrow indicates that a speed of the road user B1 at 0.5s after the moment t is 4.2 $m/s$ and a navigation angle is -1.42 rad. A probability that the road user B1 arrives at the reachable location at 0.5s after the moment t is 0.08. Uniform speed derivation is performed on the road user B1 in a state indicated by the sub-state information 1, to obtain an intersection point C2 with the target predicted trajectory. A time period consumed by the road user B1 from 0.5s after the moment t to arriving at the intersection point C2 is 0.32s. C3 represents a location at which the ego vehicle arrives along the target predicted trajectory at 0.82s after the moment t. A time period consumed by the ego vehicle from 0.5s after the moment t to arriving at the intersection point C2 along the target predicted trajectory is 0.56s. Therefore, it may be learned that a collision time difference corresponding to the sub-state information 1 is 0.24s.

Further, FIG. 11 is a diagram of a first function used to obtain a score of each collision time difference based on each collision time difference according to an embodiment of this application. In FIG. 11, for example, the first function is represented as a piecewise function. When a value of the collision time difference is 0 to 1, the score of the collision time difference is 1 to 0.2; when a value of the collision time difference is 1 to 5, the score of the collision time difference is 0.2 to 0; and when a value of the collision time difference is greater than 5, the score of the collision time difference is 0. The ego vehicle may determine, based on the first function and the collision time difference 0.24s corresponding to the sub-state information 1, that a score corresponding to the sub-state information 1 is 0.808. It should be understood that the examples in FIG. 10 and FIG. 11 are merely for ease of understanding of this solution, and are not intended to limit this solution.

The ego vehicle may repeatedly perform the foregoing steps for a plurality of times, to obtain a collision time difference corresponding to each piece of sub-state information included in the state information of the road user B1 at the N moments after the moment t, to obtain a score corresponding to each collision time difference; and perform weighted summation on scores corresponding to a plurality of collision time differences obtained based on all the sub-state information, to obtain a risk score corresponding to the target predicted trajectory.

Optionally, a weight of the score corresponding to each collision time difference may be a probability carried in sub-state information corresponding to the collision time difference. For example, if a weight of a score corresponding to the collision time difference obtained based on the sub-state information 1 may be 0.08, the score 0.808 corresponding to the sub-state information 1 is multiplied by 0.08 to obtain 0.06464. By analogy, based on all sub-state information corresponding to the road user B1 at 0.5s after the moment t, a total score 0.44 corresponding to 0.5s after the moment t is obtained. Based on the foregoing principle, the ego vehicle may obtain a score corresponding to each of 10 moments after the moment t for all sub-state information corresponding to the road user B1 at each of the 10 moments after the moment t, and perform weighted summation on total scores corresponding to all of the 10 moments, to obtain a risk score 0.58 corresponding to the target predicted trajectory.

(2) Comfort score

In a process in which the ego vehicle travels based on the target predicted trajectory, a smaller acceleration change amount of the ego vehicle indicates better comfort corresponding to the target predicted trajectory, and a lower comfort score corresponding to the target predicted trajectory.

For example, if an acceleration used by the ego vehicle during travelling based on the target predicted trajectory is 1, an offset is 0, and an acceleration of the ego vehicle at the moment t is -0.67, in a process in which the ego vehicle travels based on the target predicted trajectory, the acceleration change amount of the ego vehicle is 1.67, and it is learned that the comfort score corresponding to the target predicted trajectory is 0.315.

Optionally, a relationship between the "acceleration change amount corresponding to the target predicted trajectory " and the "comfort score corresponding to the target predicted trajectory " may meet a second function. In this case, after obtaining the acceleration change amount of the ego vehicle in the process of travelling based on the target predicted trajectory, the ego vehicle may determine the comfort score corresponding to the target predicted trajectory based on the second function. For more intuitive understanding of this solution, FIG. 12 is a diagram of a second function used to obtain a comfort score based on an acceleration change amount according to an embodiment of this application. As shown in FIG. 12, when the acceleration change amount is 7, the comfort score determined based on the acceleration change amount is 1. It should be understood that the example in FIG. 12 is merely for ease of understanding of this solution, and is not intended to limit this solution.

(3) Passability score

For example, the acceleration used when the ego vehicle travels based on the target predicted trajectory is 1, and a value of a preset acceleration is 0.8. When the acceleration used by the ego vehicle is greater than or equal to the preset acceleration, a passability score corresponding to the target predicted trajectory may be 0.

Optionally, a relationship between "a difference between the acceleration corresponding to the target predicted trajectory and the preset acceleration" and "the passability score corresponding to the target predicted trajectory " may meet a third function. In this case, after obtaining the acceleration of the ego vehicle in the process of travelling based on the target predicted trajectory, the ego vehicle may determine the passability score corresponding to the target predicted trajectory based on the third function.

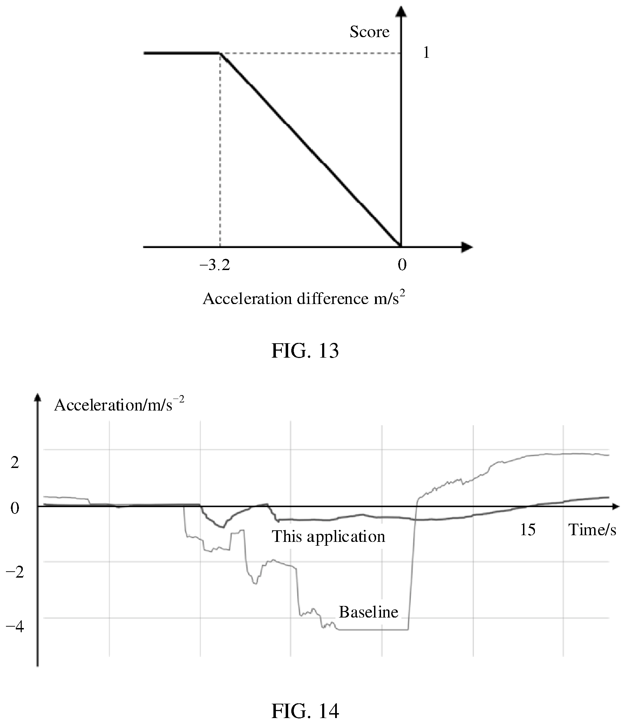

For more intuitive understanding of this solution, FIG. 13 is a diagram of a third function used to obtain a passability score based on a difference between an acceleration of an ego vehicle and a preset acceleration according to an embodiment of this application. As shown in FIG. 13, the third function may be a piecewise function. When the difference between the acceleration corresponding to the target predicted trajectory and the preset acceleration is greater than or equal to 0, the passability score corresponding to the target predicted trajectory is 0; or when the difference between the acceleration corresponding to the target predicted trajectory and the preset acceleration is less than or equal to -3.2, the passability score corresponding to the target predicted trajectory is 1; or when the difference between the acceleration corresponding to the target predicted trajectory and the preset acceleration is less than 0 and greater than -3.2, when the difference is smaller, the passability score corresponding to the target predicted trajectory is larger. It should be understood that the example in FIG. 13 is merely for ease of understanding of this solution, and is not intended to limit this solution.

(4) Offset score

For example, when the offset is 0, the obtained offset score is 0; or when the offset is 1 or -1, the obtained offset score may be 0.3. Because the offset used when the ego vehicle travels based on the target predicted trajectory is 0, an offset score corresponding to the target predicted trajectory is 0.

The ego vehicle may perform weighted summation on the risk score, the comfort score, the passability score, and the offset score that correspond to the target predicted trajectory, to obtain the first score of the target predicted trajectory, that is, obtain a first score of a policy of inferring the target predicted trajectory. For example, a weight of the risk score may be 0.8, and a weight of the comfort score may be 0.7. In this case, when the ego vehicle uses the policy in which the acceleration is 1 and the offset is 0, the first score corresponding to the inferred target predicted trajectory is $0.58\times0.8+0.315\times0.7+0+0=0.464+0.221=0.685$.

The ego vehicle may repeatedly perform the foregoing steps, to obtain a first score of each second predicted trajectory, that is, obtain a first score corresponding to each policy in the policy set of the ego vehicle. For more intuitive understanding of this solution, the following shows the first score of each second predicted trajectory in Table 2, that is, shows the first score corresponding to each policy in the policy set of the ego vehicle.

Table 2

|  | -3 | -2 | -1 | 0 | 1 | 2 |
|---|---|---|---|---|---|---|
| +1 | 0.760 | 0.674 | 0.642 | 0.657 | 0.723 | 0.901 |
| 0 | 0.725 | 0.664 | 0.625 | 0.577 | 0.685 | 0.854 |
| -1 | 0.711 | 0.648 | 0.593 | 0.517 | 0.562 | 0.673 |

The 1st row in Table 2 shows a plurality of accelerations -3, -2, -1, 0, 1, and 2 that may be used by the ego vehicle. The 1st row in Table 2 lists a plurality of offsets 1, 0, and 1 that may be used by the ego vehicle. A remaining value in Table 2 represents the first score corresponding to each policy. For example, a first score corresponding to the acceleration -3 and the offset 1 is 0.760. For another example, a first score corresponding to the acceleration -2 and the offset 1 is 0.674. For another example, a first score corresponding to the acceleration -1 and the offset 1 is 0.642. For meanings of other values in Table 2, refer to the foregoing descriptions. Meanings of the other values in Table 2 are not described herein.

It can be learned from Table 2 that a policy with a lowest score (namely, an optimal policy) is: the acceleration is 0 and the offset is -1.

Optionally, the ego vehicle may determine, based on the policy with the lowest score and the state information of the road user B1 at the N moments after the moment t, whether the ego vehicle chooses to force the right-of-way or give way in a current scenario, and then plan a route of the ego vehicle.

808: Update a first parameter based on one or more reachable locations of the road user B1 at a target moment and a location of the road user B1 at the target moment, where the target moment includes at least one of the N moments after the moment t, and the first parameter includes at least one parameter used in a process of generating a transition probability corresponding to the road user B1.

In this embodiment of this application, step 807 is an optional step. For example, the target moment includes five consecutive moments after the moment t, that is, includes 0.5s after the moment t, 1s after the moment t, 1.5s after the moment t, 1.5s after the moment t, 2s after the moment t, and 2.5s after the moment t.

The ego vehicle may alternatively evaluate state information of the road user B1 at the five consecutive moments after the moment t based on an actual location of the road user B1 at the five consecutive moments after the moment t, to obtain a first parameter value of at least one evaluation indicator. The first parameter value of the at least one evaluation indicator indicates a coverage status of the state information of the road user B1 at the five consecutive moments after the moment t for the actual location of the road user B1 at the five consecutive moments after the moment t. The first parameter is updated based on the first parameter value of the at least one evaluation indicator. The at least one indicator includes a coverage rate, a geometric deviation, and a deviation expectation. The following separately shows, in Table 3, values of the coverage rate, the geometric deviation, and the deviation expectation that correspond to each of the five consecutive moments after the moment t.

Table 3

|  | Deviation expectation | Geometric deviation | Coverage rate |
|---|---|---|---|
| 0.5s after a moment t | 1.09 | 0.025 | 0.55 |
| 1s after the moment t | 1.83 | 0.028 | 0.59 |
| 1.5s after the moment t | 2.54 | 0.032 | 0.80 |
| 2s after the moment t | 3.80 | 0.080 | 0.61 |

(continued)

|  | Deviation expectation | Geometric deviation | Coverage rate |
|---|---|---|---|
| 2.5s after the moment t | 5.09 | 0.047 | 0.59 |

The 2$^{nd}$ row in Table 3 shows that state information of the road user B1 at 0.5s after the moment t is evaluated based on an actual location of the road user B1 at 0.5s after the moment t, to obtain a deviation expectation 1.09, a geometric deviation 0.025, and a coverage rate 0.55. For content of the 3$^{rd}$ row to the 6$^{th}$ row in Table 3, refer to the foregoing descriptions of the 1$^{st}$ row. Details are not described herein again.

The ego vehicle may summarize a plurality of parameter values in Table 3 based on Formula (6) to Formula (8) in the embodiment corresponding to FIG. 2, that is, summarize values of a coverage rate, a geometric deviation, and a deviation expectation that correspond to each of the five consecutive moments after the moment t, to obtain the first parameter value of the at least one evaluation indicator. The first parameter value of the at least one evaluation indicator may include a parameter value 0.608 of the coverage rate and a parameter value 14.25 of the deviation expectation.

The ego vehicle may update $\lambda_a^1$, $\lambda_a^2$, and $\Delta_{ref}$ in the foregoing formula based on the first parameter value of the at least one evaluation indicator.

In this embodiment of this application, a solution for determining a probability of each reachable location of a road user at a next moment is provided. The state information of the road user at the moment t is obtained, and then the probability (namely, the first transition probability) that the road user performs each of the at least one action from the moment t to the moment t+1 is determined. Then, the reachable location of the road user at the moment t+1 and the probability corresponding to each reachable location are determined based on the state information of the road user at the moment t and the first transition probability. Implementation logic of the foregoing solution is consistent with actual travelling logic of the road user, and can accurately reflect a probability that the road user is at each reachable location.

To better understand beneficial effects brought by embodiments of this application, the following further describes beneficial effects brought by embodiments of this application with reference to FIG. 7 and FIG. 14. FIG. 14 is two diagrams of driving policies in the traffic scenario shown in FIG. 7 according to an embodiment of this application. FIG. 14 shows accelerations used by an ego vehicle at a plurality of moments after a current moment. As shown in FIG. 14, a travelling policy obtained in the method in this application includes: Because the ego vehicle determines that the road user B1 is a large risk, the ego vehicle is decelerated properly. After the ego vehicle is decelerated for a period of time, the ego vehicle determines that a risk between the ego vehicle and the road user B1 is reduced to a proper level, and the road user B1 may safely pass. Then, the ego vehicle accelerates to leave. An entire process is stable and human-like. For an acceleration curve corresponding to the foregoing descriptions, refer to FIG. 14. A driving policy in a baseline method includes: The ego vehicle uses a hard-braking policy, which causes extremely poor driving experience. For an acceleration curve corresponding to the foregoing descriptions, refer to FIG. 14. It should be understood that the example in FIG. 14 is merely for ease of understanding of this solution, and is not intended to limit this solution.

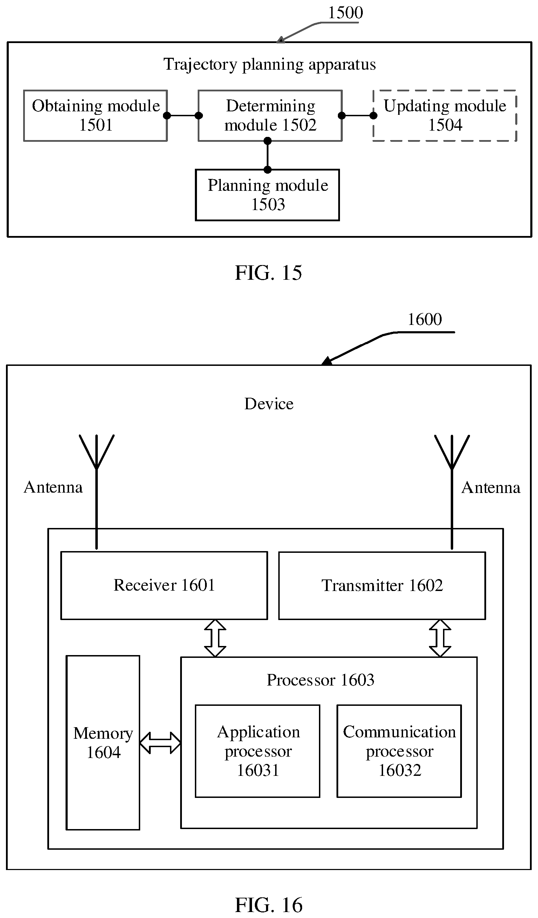

Based on the embodiments corresponding to FIG. 1 to FIG. 14, the following further provides a related device used to implement the solutions, to better implement the solutions in embodiments of this application. Specifically, FIG. 15 is a diagram of a structure of a trajectory planning apparatus according to an embodiment of this application. The trajectory planning apparatus 1500 may include:

an obtaining module 1501, configured to obtain first state information of a vulnerable road user, where the vulnerable road user is within a sensing range of an ego vehicle, and the first state information includes a location of the vulnerable road user;

a determining module 1502, configured to determine state information of the vulnerable road user at N subsequent moments based on the first state information, where the state information at the N moments includes one or more reachable locations of the vulnerable road user at each of the N moments and a probability of each reachable location, and N is an integer greater than 0; and

a planning module 1503, configured to plan a trajectory of the ego vehicle based on the state information of the vulnerable road user at the N subsequent moments.

Optionally, the first state information includes a location of the vulnerable road user at a moment t, the state information of the vulnerable road user at the N subsequent moments includes second state information of the vulnerable road user at a moment t+1, and the determining module 1502 is specifically configured to: determine a first transition probability corresponding to the vulnerable road user, where the first transition probability indicates a probability that the vulnerable road user performs each of at least one action from the moment t to the moment t+1; and determine second state information of the vulnerable road user at the moment t+1 based on the first state information and the first transition probability, where the second state information includes one or more reachable locations of the vulnerable road user at the moment t+1 and a probability corresponding to each reachable location.

Optionally, the first transition probability is obtained based on a second transition probability and/or a third transition probability, the second transition probability indicates a probability that the vulnerable road user uses each of at least one acceleration from the moment t to the moment t+1, and the third transition probability indicates a probability that the vulnerable road user uses each of at least one steering angle from the moment t to the moment t+1.

Optionally, the first state information further includes a second acceleration of the vulnerable road user at the moment t, and the obtaining module 1501 is further configured to obtain first information of the vulnerable road user, where the first information indicates a probability that the vulnerable road user forces the right-of-way; and the determining module 1502 is further configured to determine the second transition probability based on the second acceleration and the first information.

Optionally, the determining module 1502 is specifically configured to: determine, based on the second acceleration, a first probability that the vulnerable road user uses a first acceleration from the moment t to the moment t+1, where the first acceleration is any one of the at least one acceleration, and the first probability is larger when a distance between the first acceleration and the second acceleration is shorter; and determine, based on the first information, that the vulnerable road user uses a first adjustment coefficient of the first acceleration from the moment t to the moment t+1, and determine the second transition probability based on the first probability and the first adjustment coefficient.

Optionally, the first state information further includes a second steering angle of the vulnerable road user at the moment t; the obtaining module 1501 is further configured to obtain second information of the vulnerable road user, where the second information indicates at least one first predicted trajectory of the vulnerable road user; and the determining module 1502 is further configured to determine the third transition probability based on the second steering angle and the second information.

Optionally, the determining module 1502 is specifically configured to: determine, based on the second steering angle, a second probability that the vulnerable road user uses a first steering angle from the moment t to the moment t+1, where the first steering angle is any one of the at least one steering angle, and the second probability is larger when a distance between the first steering angle and the second steering angle is shorter; and determine, based on the second information, that the vulnerable road user uses a second adjustment coefficient of the first steering angle from the moment t to the moment t+1, and determine the third transition probability based on the second probability and the second adjustment coefficient.

Optionally, the determining module 1502 is further configured to determine a feasible steering angle range of the vulnerable road user based on a first degree of inclination of the vulnerable road user, where the first degree of inclination indicates an allowable largest degree of inclination of the vulnerable road user in a steering process, and the at least one steering angle is obtained based on the feasible steering angle range of the vulnerable road user.

Optionally, the determining module 1502 is specifically configured to determine the first transition probability corresponding to the vulnerable road user according to a Markov chain algorithm.

Optionally, the determining module 1502 is specifically configured to determine the second state information of the vulnerable road user at the moment t+1 based on the first state information, a feasible acceleration range of the vulnerable road user, a feasible steering angle range of the vulnerable road user, a kinematics model, and the first transition probability.

Optionally, the obtaining module 1501 is further configured to obtain at least one second predicted trajectory of the ego vehicle, where each second predicted trajectory indicates a location of the ego vehicle within the N moments; and the planning module 1503 is specifically configured to: generate evaluation information of each second predicted trajectory based on the state information of the vulnerable road user at the N subsequent moments; and plan the trajectory of the ego vehicle based on the evaluation information of each second predicted trajectory.

Optionally, the trajectory planning apparatus 1500 further includes an updating module 1504, configured to update a first parameter based on one or more reachable locations of the vulnerable road user at a target moment and a location of the vulnerable road user at the target moment, where the target moment includes one or more moments after the moment t, and the first parameter includes at least one parameter used in a process of generating a transition probability corresponding to the vulnerable road user.

It should be noted that content such as information exchange and an execution process between modules/units in the trajectory planning apparatus 1500 is based on a same idea as the method embodiments corresponding to FIG. 1 and FIG. 14 in this application. For specific content, refer to descriptions in the method embodiments shown in this application. Details are not described herein again.

An embodiment of this application further provides a device. For example, the device may be a vehicle, a mobile robot, or another device. FIG. 16 is a diagram of a structure of a device according to an embodiment of this application. The device 1600 includes a receiver 1601, a transmitter 1602, a processor 1603, and a memory 1604 (there may be one or more processors 1603 in the execution device 1600, and one processor is used as an example in FIG. 16) The processor 1603 may include an application processor 16031 and a communication processor 16032. In some embodiments of this application, the receiver 1601, the transmitter 1602, the processor 1603, and the memory 1604 may be connected through a bus or in another manner.

The memory 1604 may include a read-only memory and a random access memory, and provide instructions and data to the processor 1603. A part of the memory 1604 may further include a non-volatile random access memory (non-volatile random access memory, NVRAM). The memory 1604 stores a processor and operation instructions, executable modules or data structures, or a subset thereof, or an extended set thereof. The operation instructions may include various operation instructions for implementing various operations.

The processor 1603 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1603 or may be implemented by the processor 1603. The processor 1603 may be an integrated circuit chip and has a signal processing capability. In an implementation process, the steps in the foregoing method may be implemented by using a hardware integrated logic circuit in the processor 1603, or by using instructions in a form of software. The processor 1603 may be a general-purpose processor, a digital signal processor (digital signal processor, DSP), a microprocessor or a microcontroller, an application-specific integrated circuit (application-specific integrated circuit, ASIC), a field programmable gate array (field programmable gate array, FPGA) or another programmable logic device, a discrete gate or transistor logic device, or a discrete hardware component. The processor 1603 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1604, and the processor 1603 reads information in the memory 1604 and completes the steps in the foregoing methods in combination with hardware of the processor.

The receiver 1601 may be configured to: receive input digital or character information, and generate a signal input related to function control and related setting of the execution device. The transmitter 1602 may be configured to output digital or character information through a first interface. The transmitter 1602 may be further configured to send instructions to a disk group through the first interface, to modify data in the disk group. The transmitter 1602 may further include a display device, for example, a display.

In this embodiment of this application, in one case, the processor 1603 is configured to perform the trajectory planning method performed by the first device in the embodiments corresponding to FIG. 1 to FIG. 14. It should be noted that a specific manner in which the processor 1603 performs the foregoing steps is based on a same concept as the method embodiments corresponding to FIG. 1 to FIG. 14 in this application. Technical effects brought by the specific manner are the same as those in the method embodiments corresponding to FIG. 1 to FIG. 14 in this application. For specific content, refer to the descriptions in the foregoing method embodiments in this application. Details are not described herein again.

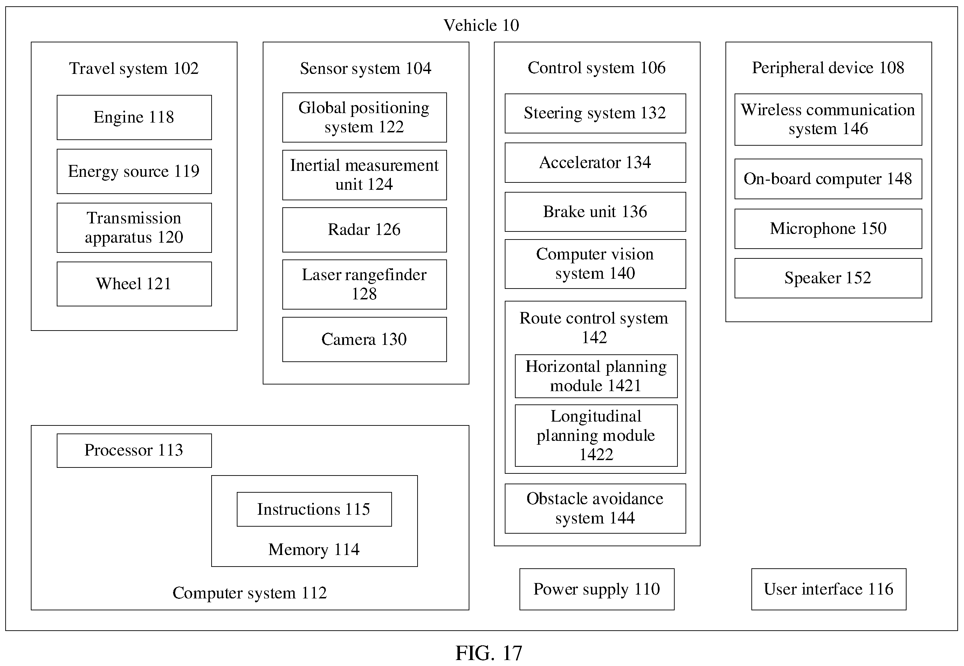

Still, FIG. 17 is a diagram of a structure of a vehicle according to an embodiment of this application. A vehicle 10 is configured to be in a completely or partially autonomous driving mode. For example, the vehicle 10 may control the vehicle 10 while being in the autonomous driving mode, and may determine, by performing a manual operation, a current state of the vehicle and a surrounding environment of the vehicle, determine a possible behavior of at least one another vehicle in the surrounding environment, determine a confidence level corresponding to a possibility that the another vehicle performs the possible behavior, and control the vehicle 10 based on the determined information. When the vehicle 10 is in the autonomous driving mode, the vehicle 10 may alternatively be configured to operate without interacting with a person.

The vehicle 10 may include various subsystems, for example, a travel system 102, a sensor system 104, a control system 106, one or more peripheral devices 108, a power supply 110, a computer system 112, and a user interface 116. Optionally, the vehicle 10 may include more or fewer subsystems, and each subsystem may include a plurality of components. In addition, the subsystems and components of the vehicle 10 may be connected to each other in a wired or wireless manner.

The travel system 102 may include a component that provides power for the vehicle 10 to move. In an embodiment, the travel system 102 may include an engine 118, an energy source 119, a transmission apparatus 120, and wheels/tires 121.

The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy. Examples of the energy source 119 include gasoline, diesel, other oil-based fuels, propane, other compressed gas-based fuels, ethanol, solar panels, batteries, and other power sources. The energy source 119 may also provide energy for another system of the vehicle 10. The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more of the wheels 121.

The sensor system 104 may include several sensors that can sense information about the surrounding environment of the autonomous driving vehicle 100. For example, the sensor system 104 may include a positioning system 122 (the positioning system may be a global positioning system GPS, a BeiDou system, or another positioning system), an inertial measurement unit (inertial measurement unit, IMU) 124, a radar 126, a laser rangefinder 128, and a camera 130. The sensor system 104 may further include a sensor (for example, a vehicle-mounted air quality monitor, a fuel gauge, or an oil temperature gauge) of an internal system of the monitored autonomous driving vehicle 100. Sensor data from one or more of these sensors may be used to detect an object and corresponding features (a location, a shape, a direction, a speed, and the like) of the object. Such detection and recognition are key functions for implementing a secure operation of the autonomous driving vehicle 100.

The positioning system 122 may be configured to estimate a geographical location of the autonomous driving vehicle 100. The IMU 124 is configured to sense a location and an orientation change of the autonomous driving vehicle 100 based on inertial acceleration. In an embodiment, the IMU 124 may be a combination of an accelerometer and a gyroscope. The radar 126 may sense an object in the surrounding environment of the autonomous driving vehicle 100 through a radio signal, and may be specifically represented as a millimeter-wave radar or a lidar. In some embodiments, in addition to sensing the object, the radar 126 may be further configured to sense a speed and/or an advancing direction of the object. The laser rangefinder 128 may sense, by using a laser, an object in an environment in which the autonomous driving vehicle 100 is located. In some embodiments, the laser rangefinder 128 may include one or more laser sources, a laser scanner, one or more detectors, and another system component. The camera 130 may be configured to capture a plurality of images of the surrounding environment of the autonomous driving vehicle 100. The camera 130 may be a static camera or a video camera.

The control system 106 controls operations of the vehicle 10 and components of the vehicle 10. The control system 106 may include various parts, including a steering system 132, an accelerator 134, a brake unit 136, a computer vision system 140, a route control system 142, and an obstacle avoidance system 144.

The steering system 132 may be operated to adjust an advancing direction of the vehicle 10. For example, in an embodiment, the steering system 132 may be a steering wheel system. The accelerator 134 is configured to control an operating speed of the engine 118 and further control a speed of the vehicle 10. The brake unit 136 is configured to control the vehicle 10 to decelerate. The brake unit 136 may use friction to slow down the wheel 121. In another embodiment, the brake unit 136 may convert kinetic energy of the wheel 121 into a current. Alternatively, the brake unit 136 may reduce a rotational speed of the wheels 121 in another form to control the speed of the vehicle 10. The computer vision system 140 may be operated to process and analyze an image captured by the camera 130, to recognize an object and/or a feature in the surrounding environment of the vehicle 10. The objects and/or the features may include a traffic signal, a road boundary, and an obstacle. The computer vision system 140 may use an object recognition algorithm, a structure from motion (Structure from Motion, SFM) algorithm, video tracking, and other computer vision technologies. In some embodiments, the computer vision system 140 may be configured to draw a map for an environment, track an object, estimate a speed of the object, and the like. The route control system 142 is configured to determine a travelling route and a travelling speed of the vehicle 10. In some embodiments, the route control system 142 may include a horizontal planning module 1421 and a longitudinal planning module 1422. The horizontal planning module 1421 and the longitudinal planning module 1422 are separately configured to determine the travelling route and the travelling speed of the vehicle 10 based on data from the obstacle avoidance system 144, the GPS 122, and one or more predetermined maps. The obstacle avoidance system 144 is configured to recognize, evaluate, and avoid or bypass obstacles in the environment around the vehicle 10 in another manner. The obstacles may be specifically represented as an actual obstacle and a virtual moving object that may collide with the vehicle 10. In an example, the control system 106 may additionally or alternatively include a component other than the components shown and described. Alternatively, some of the foregoing shown components may be reduced.

The vehicle 10 interacts with an external sensor, another vehicle, another computer system, or a user by using the peripheral device 108. The peripheral device 108 may include a wireless communication system 146, an on-board computer 148, a microphone 150, and/or a speaker 152. In some embodiments, the peripheral device 108 provides a means for a user of the vehicle 10 to interact with the user interface 116. For example, the on-board computer 148 may provide information for the user of the vehicle 10. The user interface 116 may further operate the on-board computer 148 to receive a user input. The on-board computer 148 may perform an operation through a touchscreen. In another case, the peripheral device 108 may provide a means for the vehicle 10 to communicate with another device located in the vehicle. For example, the microphone 150 may receive audio (for example, a voice command or another audio input) from the user of the vehicle 10. Similarly, the speaker 152 may output audio to the user of the vehicle 10. The wireless communication system 146 may communicate with one or more devices directly or through a communication network in a wireless manner. For example, the wireless communication system 146 may use 3G cellular communication such as CDMA, EVD0, or GSM/GPRS, 4G cellular communication such as LTE, or 5G cellular communication. The wireless communication system 146 may perform communication by using a wireless local area network (wireless local area network, WLAN). In some embodiments, the wireless communication system 146 may directly communicate with a device through an infrared link, Bluetooth, or ZigBee. Other wireless protocols such as various vehicle communication systems may be used. For example, the wireless communication system 146 may include one or more dedicated short-range communications (dedicated short-range communications, DSRC) devices, and these devices may include public and/or private data communication between vehicles and/or roadside stations.

The power supply 110 may supply power to various components of the vehicle 10. In an embodiment, the power supply 110 may be a rechargeable lithium-ion or lead-acid battery. One or more battery packs of such a battery may be configured as a power supply to supply power to various components of the vehicle 10. In some embodiments, the power supply 110 and the energy source 119 may be implemented together, for example, in some pure electric vehicles.

Some or all of functions of the vehicle 10 are controlled by the computer system 112. The computer system 112 may include at least one processor 113. The processor 113 executes instructions 115 stored in a non-transient computer-readable medium, for example, a memory 114. The computer system 112 may alternatively be a plurality of computing devices that control an individual component or a subsystem of the vehicle 10 in a distributed manner. The processor 113 may be any conventional processor, such as a commercially available central processing unit (central processing unit, CPU). Optionally, the processor 113 may be a dedicated device such as an application-specific integrated circuit (application-specific integrated circuit, ASIC) or another hardware-based processor. Although FIG. 17 functionally illustrates the processor, the memory, and another component of the computer system 112 in a same block, a person of ordinary skill in the art should understand that the processor or the memory may actually include a plurality of processors or memories that are not stored in a same physical housing. For example, the memory 114 may be a hard disk drive or another storage medium located in a housing different from a housing of the computer system 112. Therefore, a reference to the processor 113 or the memory 114 is understood as a reference to a set of processors or memories that may or may not operate concurrently. A difference from using a single processor to perform the steps described herein is that some components such as a steering component and a deceleration component may each have a processor of the component, and the processor performs only computation related to a component-specific function.

In various aspects described herein, the processor 113 may be located far away from the vehicle 10 and wirelessly communicate with the vehicle 10. In another aspect, some of the processes described herein are performed on the processor 113 disposed inside the vehicle 10, while others are performed by a remote processor 113, including performing a step necessary for single manipulation.

In some embodiments, the memory 114 may include instructions 115 (for example, program logic), and the instructions 115 may be executed by the processor 113 to perform various functions of the vehicle 10, including the functions described above. The memory 114 may also include additional instructions, including instructions to send data to, receive data from, interact with, and/or control one or more of the travel system 102, the sensor system 104, the control system 106, and the peripheral device 108. In addition to the instructions 115, the memory 114 may further store data, for example, road map and route information; a location, a direction, a speed, and other vehicle data of a vehicle; and other information. Such information may be used by the vehicle 10 and the computer system 112 when the vehicle 10 operates in an autonomous mode, a semi-autonomous mode, and/or a manual mode. The user interface 116 is configured to provide information for or receive information from the user of the vehicle 10. Optionally, the user interface 116 may include one or more input/output devices in a set of peripheral devices 108, for example, the wireless communication system 146, the on-board computer 148, the microphone 150, and the speaker 152.

The computer system 112 may control a function of the vehicle 10 based on inputs received from various subsystems (for example, the travel system 102, the sensor system 104, and the control system 106) and the user interface 116. For example, the computer system 112 may control the steering system 132 by using an input from the control system 106, to avoid an obstacle detected by the sensor system 104 and the obstacle avoidance system 144. In some embodiments, the computer system 112 may be operated to provide control over the vehicle 10 and the subsystems of the vehicle 10 in many aspects.

Optionally, one or more of the foregoing components may be installed separately from or associated with the vehicle 10. For example, the memory 114 may be partially or completely separated from the vehicle 10. The foregoing components may be communicatively coupled together in a wired and/or wireless manner.

Optionally, the foregoing components are merely examples. In actual application, components in the foregoing modules may be added or deleted based on an actual requirement. FIG. 17 should not be understood as a limitation on this embodiment of this application. An autonomous driving vehicle travelling on a road, for example, the foregoing vehicle 10, may recognize an object in a surrounding environment of the vehicle to determine an adjustment to a current speed. The object may be another vehicle, a traffic control device, or an object of another type. In some examples, each recognized object may be considered independently, and the speed of the self-driving vehicle to be adjusted may be determined based on a respective characteristic of the object, such as a current speed and an acceleration of the object, and a spacing between the object and the autonomous driving vehicle.

Optionally, the vehicle 10 or a computing device, such as the computer system 112, the computer vision system 140, or the memory 114 in FIG. 17, associated with the vehicle 10 may predict behavior of the recognized object based on the feature of the recognized object and a state (for example, traffic, rain, or ice on a road) of the surrounding environment. Optionally, each of the identified objects depends on behavior of each other, and therefore all the identified objects may be considered together to predict behavior of a single identified object. The vehicle 10 can adjust the speed of the vehicle based on the predicted behavior of the recognized object. In other words, the vehicle 10 can determine, based on the predicted behavior of the object, a stable state to which the vehicle needs to be adjusted (for example, accelerated, decelerated, or stopped). In this process, another factor may alternatively be considered to determine the speed of the vehicle 10, for example, a horizontal location of the vehicle 10 on the road on which the vehicle travels, curvature of the road, and proximity of a static object and a dynamic object. In addition to providing an instruction to adjust the speed of the autonomous driving vehicle, the computing device may further provide an instruction to modify a steering angle of the vehicle 10, so that the vehicle 10 follows a given trajectory and/or keeps safe horizontal and longitudinal distances from an object near the vehicle 10 (for example, a car in an adjacent lane of the road).

The vehicle 10 may be a car, a truck, a motorcycle, a bus, a ship, an airplane, a helicopter, a lawn mower, an entertainment vehicle, an amusement-park vehicle, a construction device, a tram, a golf cart, a train, or the like. This is not specifically limited in embodiments of this application.

Specifically, the processor 113 in the vehicle 10 may obtain at least two pieces of acceleration information by using at least two accelerometers 124. The at least two accelerometers 124 are deployed at different locations of the vehicle 10. The processor 113 in the vehicle 10 may determine angular velocity information of the vehicle 10 based on the at least two pieces of acceleration information and the location information. The location information indicates relative locations between different accelerometers 124 of the at least two accelerometers 124.

It should be noted that the trajectory planning apparatus 1500 corresponding to FIG. 15 may be deployed in the vehicle 10, or the device 1600 corresponding to FIG. 16 may be deployed in the vehicle 10. The processor 113 in the vehicle 10 may perform the steps performed by the ego vehicle in the method embodiments corresponding to FIG. 1 to FIG. 14. A specific manner in which the processor 113 performs the foregoing steps is based on a same concept as the method embodiments corresponding to FIG. 1 to FIG. 14 in this application. Technical effects brought by the specific manner are the same as those in the method embodiments corresponding to FIG. 1 to FIG. 14 in this application. For specific content, refer to the descriptions in the foregoing method embodiments in this application. Details are not described herein again.

An embodiment of this application further provides a computer-readable storage medium. The computer-readable storage medium stores a program. When the program is run on a computer, the computer is enabled to perform the steps performed by the ego vehicle in the methods described in the embodiments shown in FIG. 1 to FIG. 14.

An embodiment of this application further provides a computer program product. The computer program product includes a program. When the program is run on a computer, the computer is enabled to perform the steps performed by the ego vehicle in the methods described in the embodiments shown in FIG. 1 to FIG. 14.

An embodiment of this application further provides a circuit system. The circuit system includes a processing circuit. The processing circuit is configured to perform the steps performed by the ego vehicle in the methods described in the embodiments shown in FIG. 1 to FIG. 14.

The trajectory planning apparatus or device in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in a server performs the trajectory planning methods described in the embodiments shown in FIG. 1 to FIG. 14. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiment is merely an example. The units described as separate parts may or may not be physically separate, and parts displayed as units may or may not be physical units, may be located at one location, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CLU, a dedicated memory, a dedicated component, and the like. Usually, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be embodied in a form of a software product. The computer software product is stored in a readable storage medium, such as a floppy disk, a USB flash drive, a removable hard disk, a ROM, a RAM, a magnetic disk, or an optical disc, and includes several instructions for instructing a computer device (which may be a personal computer, a server, or a network device) to execute the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or transmitted from one computer-readable storage medium to another computer-readable storage medium. For example, the computer instructions may be transmitted from one website site, computer, server or data center to another website site, computer, server or data center in a wired (for example, coaxial cable, optical fiber, digital subscriber line (DSL)) or wireless (for example, infrared, wireless, microwave) manner. The computer-readable storage medium may be any usable medium that can be stored by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A trajectory planning method, wherein the method comprises:

   obtaining first state information of a vulnerable road user, wherein the vulnerable road user is within a sensing range of an ego vehicle, and the first state information comprises a location of the vulnerable road user;
   determining state information of the vulnerable road user at N subsequent moments based on the first state information, wherein the state information at the N moments comprises one or more reachable locations of the vulnerable road user at each of the N moments and a probability of each reachable location, and N is an integer greater than 0; and
   planning a trajectory of the ego vehicle based on the state information of the vulnerable road user at the N subsequent moments.

2. The method according to claim 1, wherein the first state information comprises a location of the vulnerable road user at a moment t, the state information of the vulnerable road user at the N subsequent moments comprises second state information of the vulnerable road user at a moment t+1, and determining the state information of the vulnerable road user at the N subsequent moments based on the first state information comprises:

   determining a first transition probability corresponding to the vulnerable road user, wherein the first transition probability indicates a probability that the vulnerable road user performs each of at least one action from the moment t to the moment t+1; and
   determining second state information of the vulnerable road user at the moment t+1 based on the first state information and the first transition probability, wherein the second state information comprises one or more reachable locations of the vulnerable road user at the moment t+1 and a probability corresponding to each reachable location.

3. The method according to claim 2, wherein the first transition probability is obtained based on a second transition probability and/or a third transition probability, the second transition probability indicates a probability that the vulnerable road user uses each of at least one acceleration from the moment t to the moment t+1, and the third transition probability indicates a probability that the vulnerable road user uses each of at least one steering angle from the moment t to the moment t+1.

4. The method according to claim 3, wherein the first state information further comprises a second acceleration of the vulnerable road user at the moment t, and the method further comprises:

obtaining first information of the vulnerable road user, wherein the first information indicates a probability that the vulnerable road user forces the right-of-way; and
determining the second transition probability based on the second acceleration and the first information.

5. The method according to claim 4, wherein determining the second transition probability based on the second acceleration and the first information comprises:

determining, based on the second acceleration, a first probability that the vulnerable road user uses a first acceleration from the moment t to the moment t+1, wherein the first acceleration is any one of the at least one acceleration, and the first probability is larger when a distance between the first acceleration and the second acceleration is shorter; and
determining, based on the first information, that the vulnerable road user uses a first adjustment coefficient of the first acceleration from the moment t to the moment t+1, and determining the second transition probability based on the first probability and the first adjustment coefficient.

6. The method according to claim 3, wherein the first state information further comprises a second steering angle of the vulnerable road user at the moment t, and the method further comprises:

obtaining second information of the vulnerable road user, wherein the second information indicates at least one first predicted trajectory of the vulnerable road user; and
determining the third transition probability based on the second steering angle and the second information.

7. The method according to claim 6, wherein determining the third transition probability based on the second steering angle and the second information comprises:

determining, based on the second steering angle, a second probability that the vulnerable road user uses a first steering angle from the moment t to the moment t+1, wherein the first steering angle is any one of the at least one steering angle, and the second probability is larger when a distance between the first steering angle and the second steering angle is shorter; and
determining, based on the second information, that the vulnerable road user uses a second adjustment coefficient of the first steering angle from the moment t to the moment t+1, and determining the third transition probability based on the second probability and the second adjustment coefficient.

8. The method according to any one of claims 3 to 7, wherein the method further comprises:
determining a feasible steering angle range of the vulnerable road user based on a first degree of inclination of the vulnerable road user, wherein the first degree of inclination indicates an allowable largest degree of inclination of the vulnerable road user in a steering process, and the at least one steering angle is obtained based on the feasible steering angle range of the vulnerable road user.

9. The method according to any one of claims 2 to 7, wherein determining the first transition probability corresponding to the vulnerable road user comprises: determining the first transition probability corresponding to the vulnerable road user according to a Markov chain algorithm.

10. The method according to any one of claims 2 to 7, wherein determining the second state information of the vulnerable road user at the moment t+1 based on the first state information and the first transition probability comprises:
determining the second state information of the vulnerable road user at the moment t+1 based on the first state information, a feasible acceleration range of the vulnerable road user, a feasible steering angle range of the vulnerable road user, a kinematics model, and the first transition probability.

11. The method according to any one of claims 1 to 7, wherein the method further comprises:

obtaining at least one second predicted trajectory of the ego vehicle, wherein each second predicted trajectory indicates a location of the ego vehicle within the N moments; and

planning the trajectory of the ego vehicle based on the state information of the vulnerable road user at the N subsequent moments comprises:

generating evaluation information of each second predicted trajectory based on the state information of the vulnerable road user at the N subsequent moments; and

planning the trajectory of the ego vehicle based on the evaluation information of each second predicted trajectory.

12. The method according to any one of claims 2 to 7, wherein the method further comprises:
updating a first parameter based on one or more reachable locations of the vulnerable road user at a target moment and a location of the vulnerable road user at the target moment, wherein the target moment comprises one or more moments after the moment t, and the first parameter comprises at least one parameter used in a process of generating a transition probability corresponding to the vulnerable road user.

13. A trajectory planning apparatus, wherein the apparatus comprises:

an obtaining module, configured to obtain first state information of a vulnerable road user, wherein the vulnerable road user is within a sensing range of an ego vehicle, and the first state information comprises a location of the vulnerable road user;

a determining module, configured to determine state information of the vulnerable road user at N subsequent moments based on the first state information, wherein the state information at the N moments comprises one or more reachable locations of the vulnerable road user at each of the N moments and a probability of each reachable location, and N is an integer greater than 0; and

a planning module, configured to plan a trajectory of the ego vehicle based on the state information of the vulnerable road user at the N subsequent moments.

14. The apparatus according to claim 13, wherein the first state information comprises a location of the vulnerable road user at a moment t, the state information of the vulnerable road user at the N subsequent moments comprises second state information of the vulnerable road user at a moment t+1, and the determining module is specifically configured to:

determine a first transition probability corresponding to the vulnerable road user, wherein the first transition probability indicates a probability that the vulnerable road user performs each of at least one action from the moment t to the moment t+1; and

determine second state information of the vulnerable road user at the moment t+1 based on the first state information and the first transition probability, wherein the second state information comprises one or more reachable locations of the vulnerable road user at the moment t+1 and a probability corresponding to each reachable location.

15. The apparatus according to claim 14, wherein the first transition probability is obtained based on a second transition probability and/or a third transition probability, the second transition probability indicates a probability that the vulnerable road user uses each of at least one acceleration from the moment t to the moment t+1, and the third transition probability indicates a probability that the vulnerable road user uses each of at least one steering angle from the moment t to the moment t+1.

16. The apparatus according to claim 15, wherein the first state information further comprises a second acceleration of the vulnerable road user at the moment t;

the obtaining module is further configured to obtain first information of the vulnerable road user, wherein the first information indicates a probability that the vulnerable road user forces the right-of-way; and

the determining module is further configured to determine the second transition probability based on the second acceleration and the first information.

17. The apparatus according to claim 16, wherein the determining module is specifically configured to:

determine, based on the second acceleration, a first probability that the vulnerable road user uses a first acceleration from the moment t to the moment t+1, wherein the first acceleration is any one of the at least one acceleration, and the first probability is larger when a distance between the first acceleration and the second acceleration is shorter; and

determine, based on the first information, that the vulnerable road user uses a first adjustment coefficient of the first acceleration from the moment t to the moment t+1, and determine the second transition probability based on the first probability and the first adjustment coefficient.

18. The apparatus according to claim 15, wherein the first state information further comprises a second steering angle of the vulnerable road user at the moment t;

the obtaining module is further configured to obtain second information of the vulnerable road user, wherein the second information indicates at least one first predicted trajectory of the vulnerable road user; and
the determining module is further configured to determine the third transition probability based on the second steering angle and the second information.

19. The apparatus according to claim 18, wherein the determining module is specifically configured to:

determine, based on the second steering angle, a second probability that the vulnerable road user uses a first steering angle from the moment t to the moment t+1, wherein the first steering angle is any one of the at least one steering angle, and the second probability is larger when a distance between the first steering angle and the second steering angle is shorter; and
determine, based on the second information, that the vulnerable road user uses a second adjustment coefficient of the first steering angle from the moment t to the moment t+1, and determine the third transition probability based on the second probability and the second adjustment coefficient.

20. The apparatus according to any one of claims 15 to 19, wherein
the determining module is further configured to determine a feasible steering angle range of the vulnerable road user based on a first degree of inclination of the vulnerable road user, wherein the first degree of inclination indicates an allowable largest degree of inclination of the vulnerable road user in a steering process, and the at least one steering angle is obtained based on the feasible steering angle range of the vulnerable road user.

21. The apparatus according to any one of claims 14 to 19, wherein
the determining module is specifically configured to determine the first transition probability corresponding to the vulnerable road user according to a Markov chain algorithm.

22. The apparatus according to any one of claims 14 to 19, wherein
the determining module is specifically configured to determine the second state information of the vulnerable road user at the moment t+1 based on the first state information, a feasible acceleration range of the vulnerable road user, a feasible steering angle range of the vulnerable road user, a kinematics model, and the first transition probability.

23. The apparatus according to any one of claims 13 to 19, wherein the obtaining module is further configured to obtain at least one second predicted trajectory of the ego vehicle, wherein each second predicted trajectory indicates a location of the ego vehicle within the N moments; and
the planning module is specifically configured to:

generate evaluation information of each second predicted trajectory based on the state information of the vulnerable road user at the N subsequent moments; and
plan the trajectory of the ego vehicle based on the evaluation information of each second predicted trajectory.

24. The apparatus according to any one of claims 13 to 19, wherein the apparatus further comprises:
an updating module, configured to update a first parameter based on one or more reachable locations of the vulnerable road user at a target moment and a location of the vulnerable road user at the target moment, wherein the target moment comprises one or more moments after the moment t, and the first parameter comprises at least one parameter used in a process of generating a transition probability corresponding to the vulnerable road user.

25. A device, comprising a processor, wherein the processor is coupled to a memory, the memory stores program instructions, and when the program instructions stored in the memory are executed by the processor, the method according to any one of claims 1 to 12 is implemented.

26. A vehicle, wherein the vehicle comprises the apparatus according to any one of claims 13 to 24, or the vehicle comprises the device according to claim 25.

27. A computer-readable storage medium, comprising a program, wherein when the program is run on a computer, the computer is enabled to perform the method according to any one of claims 1 to 12.

28. A circuit system, wherein the circuit system comprises a processing circuit, and the processing circuit is configured to perform the method according to any one of claims 1 to 12.

A first device obtains first state information of a vulnerable road user, where the vulnerable road user is within a sensing range of an ego vehicle, and the first state information includes a location of the vulnerable road user /101

The first device determines state information of the vulnerable road user at N subsequent moments based on the first state information, where the state information at the N moments includes one or more reachable locations of the vulnerable road user at each of the N moments and a probability of each reachable location, and N is an integer greater than 0 /102

The first device plans a trajectory of the ego vehicle based on the state information of the vulnerable road user at the N subsequent moments /103

FIG. 1

Obtain first state information of a road user at a moment t, where t is an integer greater than or equal to 0, the road user is within a sensing range of an ego vehicle, and the first state information includes a location of the road user at the moment t  — 201

Obtain first information and/or second information of the road user, where the first information indicates a probability that the road user forces the right-of-way, and the second information indicates at least one first predicted trajectory of the road user  — 202

Obtain a feasible acceleration range of the road user  — 203

Determine a feasible steering angle range of the road user based on a first degree of inclination of the road user, where the first degree of inclination indicates an allowable largest degree of inclination of the road user in a steering process, and a third transition probability is obtained based on the feasible steering angle range of the road user  — 204

Determine a first transition probability corresponding to the road user, where the first transition probability indicates a probability that the road user performs each of at least one action from the moment t to a moment t+1  — 205

Determine second state information of the road user at the moment t+1 based on the first state information and the first transition probability, where the second state information includes one or more reachable locations of the road user at the moment t+1 and a probability corresponding to each reachable location  — 206

Obtain at least one second predicted trajectory of the ego vehicle, where each second predicted trajectory indicates a location of the ego vehicle within N moments after the moment t, and N is an integer greater than or equal to 1  — 207

Generate evaluation information of each second predicted trajectory based on state information of the road user at the N moments after the moment t, where the state information of the road user at the N moments is obtained based on the state information of the road user at the moment t  — 208

Plan a trajectory of the ego vehicle  — 209

Update a first parameter based on one or more reachable locations of the road user at a target moment and a location of the road user at the target moment, where the target moment includes one or more moments after the moment t, and the first parameter includes at least one parameter used in a process of generating a transition probability corresponding to the road user  — 210

FIG. 2

Distribution of the
plurality of first
probabilities

A plurality of
first
probabilities
corresponding to
a plurality of
accelerations

Accelerations in
ascending order

First probability
corresponding to a
second acceleration

FIG. 3

FIG. 4

First score of each second predicted
trajectory of an ego vehicle

Plan a route of the ego vehicle

FIG. 5

Actual location of the first
road user at the moment t+1

Seven predicted locations of a first road user
at a moment t+1 and a probability of each
predicted location

FIG. 6

Ego vehicle

Road user

Reference trajectory
of the ego vehicle

Predicted trajectory
of the road user

FIG. 7

Obtain first state information of a road user B1 at a moment t, where t is an integer greater than or equal to 0 — 801

Obtain first information and second information of the road user B1, where the first information indicates a probability that the road user B1 forces the right-of-way, and the second information indicates at least one first predicted trajectory of the road user B1 — 802

Obtain a feasible acceleration range and a feasible steering angle range of the road user B1 — 803

Determine a first transition probability corresponding to the road user B1, where the first transition probability indicates a probability that the road user B1 performs each of at least one action from the moment t to a moment t+1 — 804

Determine state information of the road user B1 at N moments after the moment t based on the first state information and the first transition probability of the road user B1, where state information of the road user B1 at each moment after the moment t includes one or more reachable locations of the road user B1 at the moment and a probability corresponding to each reachable location — 805

Obtain at least one second predicted trajectory of an ego vehicle, where each second predicted trajectory indicates a location of the ego vehicle within the N moments after the moment t, and N is an integer greater than or equal to 1 — 806

Generate evaluation information of each second predicted trajectory based on the state information of the road user B1 at the N moments after the moment t, and plan a trajectory of the ego vehicle based on the evaluation information — 807

Update a first parameter based on one or more reachable locations of the road user B1 at a target moment and a location of the road user B1 at the target moment, where the target moment includes at least one of the N moments after the moment t, and the first parameter includes at least one parameter used in a process of generating a transition probability corresponding to the road user B1 — 808

FIG. 8

FIG. 9

FIG. 10

FIG. 11

FIG. 12

Score

1

−3.2                    0

Acceleration difference m/s$^2$

FIG. 13

Acceleration/m/s$^{-2}$

2

0

−2

−4

This application

Baseline

15    Time/s

FIG. 14

1500

Trajectory planning apparatus

| Obtaining module 1501 | Determining module 1502 | Updating module 1504 |

Planning module 1503

FIG. 15

1600

Device

Antenna

Antenna

Receiver 1601

Transmitter 1602

Processor 1603

Memory 1604

Application processor 16031

Communication processor 16032

FIG. 16

Vehicle 10

| Travel system 102 | Sensor system 104 | Control system 106 | Peripheral device 108 |
|---|---|---|---|
| Engine 118 | Global positioning system 122 | Steering system 132 | Wireless communication system 146 |
| Energy source 119 | Inertial measurement unit 124 | Accelerator 134 | On-board computer 148 |
| Transmission apparatus 120 | Radar 126 | Brake unit 136 | Microphone 150 |
| Wheel 121 | Laser rangefinder 128 | Computer vision system 140 | Speaker 152 |
|  | Camera 130 | Route control system 142 |  |

Route control system 142

Horizontal planning module 1421

Longitudinal planning module 1422

Obstacle avoidance system 144

Processor 113

Instructions 115

Memory 114

Computer system 112

Power supply 110

User interface 116

FIG. 17

EP 4 748 678 A1

## INTERNATIONAL SEARCH REPORT

| International application No. |
|---|
| **PCT/CN2024/109165** |

### A. CLASSIFICATION OF SUBJECT MATTER

B60W60/00(2020.01)i; B60W30/095(2012.01)i

According to International Patent Classification (IPC) or to both national classification and IPC

### B. FIELDS SEARCHED

Minimum documentation searched (classification system followed by classification symbols)

IPC: B60W60/-; B60W30/-

Documentation searched other than minimum documentation to the extent that such documents are included in the fields searched

Electronic data base consulted during the international search (name of data base and, where practicable, search terms used)

VCN, CNKI, 读秀, DUXIU: 华为, 刘飞, 郝东浩, 汤磊, 杨绍宇, 程思源, 张洪波, 人工智能, 自动驾驶, 无人驾驶, 弱势, 交通参与者, 状态, 位置, 时刻, 预测, 轨迹, 概率, 转向角, 加速度, 抢行, artificial intelligence, automatic drive, unpiloted, vulnerabe, participant, status, position, time, predict, trajectory, probability, steer angle, acceleration, preempt.

### C. DOCUMENTS CONSIDERED TO BE RELEVANT

| Category* | Citation of document, with indication, where appropriate, of the relevant passages | Relevant to claim No. |
|---|---|---|
| PX | CN 118182516 A (HUAWEI TECHNOLOGIES CO., LTD.) 14 June 2024 (2024-06-14) description, paragraphs 65-152, and figures 1-17 | 1-28 |
| X | CN 113442947 A (HONDA MOTOR CO., LTD.) 28 September 2021 (2021-09-28) description, paragraphs 47-163, and figures 1-22 | 1-4, 9, 11-16, 21, 23-28 |
| Y | CN 113442947 A (HONDA MOTOR CO., LTD.) 28 September 2021 (2021-09-28) description, paragraphs 47-163, and figures 1-22 | 6, 8, 10, 18, 20, 22 |
| Y | CN 113226885 A (HUAWEI TECHNOLOGIES CO., LTD.) 06 August 2021 (2021-08-06) description, paragraphs 81-194, and figures 1-13 | 6, 8, 10, 18, 20, 22 |
| X | CN 112498365 A (BAIDU USA LLC) 16 March 2021 (2021-03-16) description, paragraphs 20-87, and figures 1-7 | 1-2, 9, 12-14, 21, 24-28 |
| X | CN 112686421 A (HONDA MOTOR CO., LTD.) 20 April 2021 (2021-04-20) description, paragraphs 33-108, and figures 1-8 | 1-2, 9, 12-14, 21, 24-28 |
| X | US 11433922 B1 (ZOOX, INC.) 06 September 2022 (2022-09-06) description, columns 5-14, and figures 1-7 | 1-2, 9, 12-14, 21, 24-28 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 September 2024** | **18 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 748 678 A1**

## INTERNATIONAL SEARCH REPORT

International application No.

**PCT/CN2024/109165**

### C.    DOCUMENTS CONSIDERED TO BE RELEVANT

| Category* | Citation of document, with indication, where appropriate, of the relevant passages | Relevant to claim No. |
|---|---|---|
| X | US 2021139026 A1 (HYUNDAI APTIV AD. LLC.) 13 May 2021 (2021-05-13) description, paragraphs 123-203, and figures 1-19 | 1-2, 9, 12-14, 21, 24-28 |
| X | CN 111942407 A (SENSETIME GROUP LIMITED et al.) 17 November 2020 (2020-11-17) description, paragraphs 27-142, and figures 1-7 | 1-2, 9, 12-14, 21, 24-28 |
| A | CN 115221970 A (CHONGQING CHANG'AN AUTOMOBILE CO., LTD.) 21 October 2022 (2022-10-21) entire document | 1-28 |
| A | US 2017329332 A1 (UBER TECHNOLOGIES, INC.) 16 November 2017 (2017-11-16) entire document | 1-28 |
| A | US 2021031760 A1 (NISSAN NORTH AMERICA, INC. et. al.) 04 February 2021 (2021-02-04) entire document | 1-28 |
| A | US 2021046954 A1 (UATC, LLC.) 18 February 2021 (2021-02-18) entire document | 1-28 |
| A | US 2023030474 A1 (ARGO AI, LLC.) 02 February 2023 (2023-02-02) entire document | 1-28 |

Form PCT/ISA/210 (second sheet) (July 2022)

51

## INTERNATIONAL SEARCH REPORT
### Information on patent family members

| International application No. |
|---|
| **PCT/CN2024/109165** |

| Patent document cited in search report | | | Publication date (day/month/year) | Patent family member(s) | | | Publication date (day/month/year) |
|---|---|---|---|---|---|---|---|
| CN | 118182516 | A | 14 June 2024 | None | | | |
| CN | 113442947 | A | 28 September 2021 | JP | 2021157403 | A | 07 October 2021 |
| | | | | JP | 7414612 | B2 | 16 January 2024 |
| | | | | US | 2021300362 | A1 | 30 September 2021 |
| | | | | US | 11897464 | B2 | 13 February 2024 |
| | | | | CN | 113442947 | B | 13 August 2024 |
| CN | 113226885 | A | 06 August 2021 | WO | 2022246767 | A1 | 01 December 2022 |
| CN | 112498365 | A | 16 March 2021 | US | 2021139022 | A1 | 13 May 2021 |
| | | | | US | 11945434 | B2 | 02 April 2024 |
| | | | | EP | 3819182 | A1 | 12 May 2021 |
| | | | | EP | 3819182 | B1 | 03 April 2024 |
| | | | | CN | 112498365 | B | 21 June 2024 |
| CN | 112686421 | A | 20 April 2021 | US | 2021118289 | A1 | 22 April 2021 |
| | | | | US | 11756418 | B2 | 12 September 2023 |
| | | | | CN | 112686421 | B | 03 May 2024 |
| | | | | JP | 2021068423 | A | 30 April 2021 |
| | | | | JP | 7466407 | B2 | 12 April 2024 |
| US | 11433922 | B1 | 06 September 2022 | None | | | |
| US | 2021139026 | A1 | 13 May 2021 | GB | 202206502 | D0 | 15 June 2022 |
| | | | | GB | 2606638 | A | 16 November 2022 |
| | | | | GB | 2606638 | B | 02 August 2023 |
| | | | | KR | 20210055617 | A | 17 May 2021 |
| | | | | KR | 102532546 | B1 | 12 May 2023 |
| | | | | US | 2021284147 | A1 | 16 September 2021 |
| | | | | US | 11535248 | B2 | 27 December 2022 |
| | | | | KR | 20230070193 | A | 22 May 2023 |
| | | | | US | 2023111121 | A1 | 13 April 2023 |
| | | | | US | 11858508 | B2 | 02 January 2024 |
| | | | | GB | 202017591 | D0 | 23 December 2020 |
| | | | | GB | 2591330 | A | 28 July 2021 |
| | | | | GB | 2591330 | B | 15 June 2022 |
| | | | | DE | 102020129456 | A1 | 12 May 2021 |
| | | | | US | 11912271 | B2 | 27 February 2024 |
| | | | | GB | 202215274 | D0 | 30 November 2022 |
| | | | | GB | 2609783 | A | 15 February 2023 |
| | | | | GB | 2609783 | B | 23 August 2023 |
| | | | | CN | 112783151 | A | 11 May 2021 |
| CN | 111942407 | A | 17 November 2020 | WO | 2022022721 | A1 | 03 February 2022 |
| | | | | CN | 111942407 | B | 23 September 2022 |
| | | | | JP | 2023511765 | W | 22 March 2023 |
| | | | | US | 2023142676 | A1 | 11 May 2023 |
| | | | | JP | 7513726 | B2 | 09 July 2024 |
| CN | 115221970 | A | 21 October 2022 | None | | | |
| US | 2017329332 | A1 | 16 November 2017 | None | | | |
| US | 2021031760 | A1 | 04 February 2021 | WO | 2021021269 | A1 | 04 February 2021 |
| | | | | EP | 4004770 | A1 | 01 June 2022 |
| | | | | EP | 4004770 | A4 | 14 December 2022 |
| | | | | JP | 2022542277 | A | 30 September 2022 |
| | | | | JP | 7401650 | B2 | 19 December 2023 |

Form PCT/ISA/210 (patent family annex) (July 2022)

**INTERNATIONAL SEARCH REPORT**
Information on patent family members

International application No.

**PCT/CN2024/109165**

| Patent document cited in search report | | | Publication date (day/month/year) | Patent family member(s) | | | Publication date (day/month/year) |
|---|---|---|---|---|---|---|---|
| | | | | CN | 114175023 | A | 11 March 2022 |
| US | 2021046954 | A1 | 18 February 2021 | US | 11634162 | B2 | 25 April 2023 |
| | | | | WO | 2021034734 | A1 | 25 February 2021 |
| US | 2023030474 | A1 | 02 February 2023 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311006346